(19) Europäisches Patentamt / European Patent Office / Office européen des brevets

(11) **EP 2 979 266 B1**

(12) **FASCICULE DE BREVET EUROPEEN**

(45) Date de publication et mention de la délivrance du brevet:
**30.11.2016 Bulletin 2016/48**

(21) Numéro de dépôt: **14721439.9**

(22) Date de dépôt: **24.03.2014**

(51) Int Cl.:
**G10L 19/16** *(2013.01)*    **H04M 3/56** *(2006.01)*
**H04M 7/00** *(2006.01)*    G10L 19/24 *(2013.01)*

(86) Numéro de dépôt international:
**PCT/FR2014/050683**

(87) Numéro de publication internationale:
**WO 2014/154988 (02.10.2014 Gazette 2014/40)**

(54) **MIXAGE PARTIEL OPTIMISÉ DE FLUX AUDIO CODÉS SELON UN CODAGE PAR SOUS-BANDES**

OPTIMIERTES PARTIELLES MISCHEN VON AUDIOSTRÖMEN MIT SUBBAND-CODIERUNG

OPTIMIZED PARTIAL MIXING OF AUDIO STREAMS ENCODED BY SUB-BAND ENCODING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2013 FR 1352672**

(43) Date de publication de la demande:
**03.02.2016 Bulletin 2016/05**

(73) Titulaire: **Orange**
**75015 Paris (FR)**

(72) Inventeurs:
• **LAMBLIN, Claude**
  **F-22730 Tregastel (FR)**
• **KOVESI, Balazs**
  **F-Lannion 22300 (FR)**
• **NAGLE, Arnault**
  **F-22300 Lannion (FR)**

(74) Mandataire: **Froger, Marie-Hélène**
**Orange**
**IMTW/OLPS/IPL/PAT**
**Orange Gardens**
**44 Avenue de la République**
**CS 50010**
**92326 Châtillon Cedex (FR)**

(56) Documents cités:
• **HIWASAKI Y ET AL: "ITU-T G.711.1: extending G.711 to higher-quality wideband speech", IEEE COMMUNICATIONS MAGAZINE, IEEE SERVICE CENTER, PISCATAWAY, US, vol. 47, no. 10, 1 octobre 2009 (2009-10-01), pages 110-116, XP011283324, ISSN: 0163-6804, DOI: 10.1109/MCOM.2009.5273817 cité dans la demande**
• **SHIGEAKI SASAKI NTT JAPAN: "A Simple Partial Mixing Method for Wideband Extension to G.711", ITU-T DRAFT ; STUDY PERIOD 2005-2008, INTERNATIONAL TELECOMMUNICATION UNION, GENEVA ; CH, vol. Study Group 16, 16 février 2007 (2007-02-16), pages 1-3, XP017543868,**

**Description**

**DOMAINE TECHNIQUE**

La présente invention se rapporte aux traitements d'une pluralité de flux audio codés comme le mixage, le multiplexage de signaux, le transcodage, le décodage, les traitements dans le domaine codé et autres traitements particuliers.

Ces traitements peuvent être effectués dans des équipements de type ponts de conférence à mixage et / ou multiplexage, terminaux de communication, passerelles de communication, etc ...

**ETAT DE LA TECHNIQUE ANTÉRIEURE**

sur réseaux synchrones (RNIS, RTC, etc...) que sur réseaux asynchrones (IP, ATM, FRAME RELAY, etc...). Les flux peuvent provenir de réseaux hétérogènes et avoir subi des traitements différents (par exemple avoir été codés par des systèmes de compression audio différents).

L'invention concerne en particulier les flux obtenus par des algorithmes de codage en sous-bandes tels que les codeurs normalisés UIT-T G.711.1 et G.722. Elle vise en particulier les traitements de type mixage et/ou de réplication des flux audio.

Les applications les plus courantes pour de tels traitements sont les communications multi-parties telles que l'audioconférence ou la visioconférence.

Deux configurations de communication sont en général considérées : une utilisant une architecture maillée avec des terminaux en liaison point à point, une autre utilisant une architecture centralisée avec une unité de contrôle multipoint (Multipoint Control Unit : MCU en anglais).

Dans le cas d'une architecture centralisée, l'unité de contrôle comporte un pont - point central qui soit « additionne » les flux audio (principe du mixage) soit duplique les flux audio (principe de la réplication). Deux grandes catégories de pont existent donc : le pont à mixage et le pont répliquant.

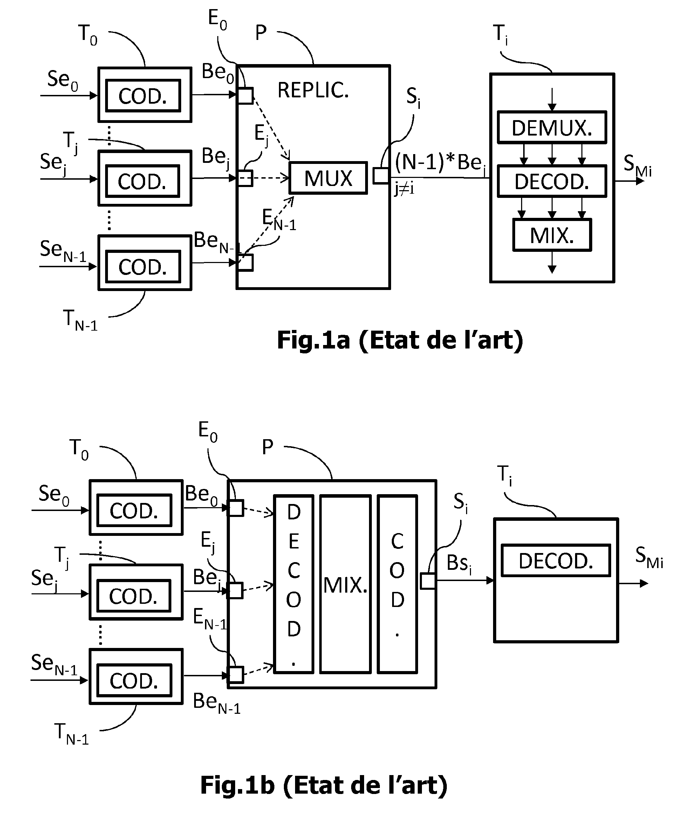

Le principe de fonctionnement du pont répliquant est illustré en **Figure 1a.** Chaque terminal émetteur ($T_0$, ..., $T_j$, ..., $T_{N-1}$) envoie au pont P son flux audio $Be_j$, obtenu par codage (COD.) de son signal d'entrée $Se_j$, qu'il soit de type mono, stéréo, multicanaux ...

Le pont transmet à chaque terminal récepteur ($T_i$) les flux des terminaux émetteurs. A partir des N signaux d'entrée reçus, pour chaque sortie *i*, le pont transmet, les (*N*-1) flux ($Be_0$, ..., $Be_{i-1}$, $Be_{i+1}$, ..., $Be_{N-1}$) reçus des entrées ($E_j$) ($0 \leq j < N, j \neq i$) au terminal *i*. Dans la Figure 1a, le terminal $T_i$ reçoit *N-1* flux du pont correspondant aux *N-1* autres terminaux ($T_0$, ..., $T_{i-1}$, $T_{i+1}$, ..., $T_{N-1}$).

Le pont se contente donc de dupliquer les flux, de les multiplexer (MUX) pour les transmettre aux terminaux respectifs via son module de sortie $S_i$. Ainsi les avantages de ce type de pont sont qu'il n'a pas besoin de ressources logicielles importantes et peut donc supporter de nombreuses conférences, qu'il n'a pas besoin d'effectuer des opérations de codage et de décodage des flux audio, ce qui évite la perte de qualité audio et la génération d'un retard supplémentaire.

Les terminaux qui reçoivent les flux dupliqués peuvent gérer indépendamment la spatialisation de ces flux si besoin.

En contrepartie, les ressources logicielles et les capacités de calculs des terminaux doivent être plus importantes pour traiter les flux reçus en les démultiplexant (DEMUX), en les décodant (DECOD.) et en les mixant (MIX.) et au besoin en les spatialisant pour obtenir le signal mixé $S_{Mi}$. Ainsi le nombre de participants à une conférence peut être limité par les capacités des terminaux.

Suivant le nombre de flux audio à transmettre dans le flux descendant vers un terminal, la bande passante correspondante peut être importante. Les terminaux doivent avoir le même type de codeurs/décodeurs pour gérer les flux, et donc potentiellement posséder un ensemble de codeurs/décodeurs important.

Le principe de fonctionnement d'un pont de mixage est illustré à la **Figure 1b** et est maintenant décrit.

Chaque terminal émetteur ($T_0$, ..., $T_j$, ..., $T_{N-1}$) envoie au pont P son flux audio $Be_j$, obtenu par codage (COD.) de son signal d'entrée $Se_j$, qu'il soit de type mono, stéréo, multicanaux, ...

Le pont effectue le mixage (MIX.) des flux puis le routage vers les terminaux concernés. A partir des N signaux d'entrée reçus, le pont prépare les N signaux de sortie à transmettre par sommation. Ainsi la somme des (*N*-1) signaux des entrées ($E_j$) ($0 \leq j < N, j \neq i$) est dirigée vers la sortie $S_i$ ($0 \leq i < N$). Pour cela, le pont audio effectue d'abord le décodage (DECOD.) des flux binaires entrants, puis pour chaque sortie *i*, les (*N*-1) signaux décodés des entrées ($E_j$) ($0 \leq j < N, j \neq i$) sont additionnés et ce signal mixé est ré-encodé (COD.) avant d'être transmis au terminal *i*. Par la suite, nous appelons flux mixé le signal ré-encodé.

Dans la figure 1b, le terminal i reçoit le flux mixé $Bs_i$ par le pont P à partir des N-1 flux ($Be_0$, ..., $Be_{i-1}$, $Be_{i+1}$, ..., $Be_{N-1}$) reçus et décodés des autres terminaux ($T_0$, ..., $T_{i-1}$, $T_{i+1}$, ..., $T_{N-1}$). Le terminal i obtient le signal mixé décodé $S_{Mi}$ par décodage (DECOD.) du flux $Bs_i$.

A l'inverse du principe du pont répliquant, ce principe concentre les capacités et ressources logicielles sur le pont de mixage et non plus dans les terminaux récepteurs. L'entité centrale intelligente permet de gérer un grand nombre de participants. Le bloc de spatialisation peut être intégré au pont de façon à gérer une scène sonore commune entre tous les participants. La bande passante nécessaire pour la transmission du flux mixé vers les terminaux n'a pas besoin d'être importante même avec un grand nombre de participants. Les terminaux n'ont pas besoin d'avoir le même type de codec du moment que le pont possède les codecs nécessaires.

En contrepartie, les traitements et les ressources nécessaires sont donc plus importantes sur le pont. Il est plus difficile de gérer indépendamment une spatialisation dans les terminaux et la qualité audio est moins bonne du fait des opérations de décodage et de codage effectuées sur le pont.

Dans une architecture de téléconférence maillée les différents terminaux sont en communication point à point. Dans le cas classique, les ($N$-1) flux audio arrivant à un terminal sont complètement décodés avant d'être mixés dans le domaine temporel. On retrouve les avantages et inconvénients pour les terminaux d'un pont répliquant.

Pour réduire la complexité du mixage de flux codés par des codeurs par transformée ou en sous bandes, différentes méthodes ont été proposées.

Une technique utilisée pour diminuer la complexité consiste à restreindre le nombre de flux retransmis au niveau du multipoint et donc à n'effectuer le mixage que sur une partie des signaux reçus. Une telle technique est par exemple décrite dans le document intitulé "Tandem-free VoIP conferencing: a bridge to next-generation networks" des auteurs Smith, P.J., Kabal, P., Blostein M.L., Rabipour, R dans IEEE Communications Magazine vol. 41, N°5, May 2003.

Plusieurs stratégies existent pour sélectionner les flux codés qui sont pris en compte : par exemple, seuls les flux avec une intensité plus forte (critère LT en anglais pour "Loudest Talker") sont considérés. Un autre critère non pas énergétique mais temporel dit FCFS (pour "First Come First Serve" en anglais) utilise un classement des voies selon l'ordre de prise de parole des participants ; ce critère s'appuie sur une détection d'activité vocale. Par exemple, dans le cas de transmission des flux audio dans des paquets selon le protocole RTP avec extension de l'entête telle que décrite dans RFC 6464 (J. Lennox, E. Ivov, E. Marocco, "A Real-time Transport Protocol (RTP) Header Extension for Client-to-Mixer Audio Level Indication", RFC 6464, December 2011), l'entête comprend une indication du niveau du flux audio et éventuellement un indicateur d'activité vocale, ce qui facilite cette sélection du flux dans un équipement de mixage (tel qu'un pont).

Selon les systèmes, le nombre de flux sélectionnés peut être fixe ou variable. En général, on considère que la sélection de deux à trois flux permet un bon compromis entre réduction de complexité et maintien d'un bon niveau de participation. Le critère FCFS utilise les décisions DAV (pour "Détection d'activité vocale", en anglais VAD pour "Voice Activity Detector") tandis que le critère LT nécessite une mesure de la puissance du signal ou de son énergie.

La réduction du nombre d'entrées est aussi utilisée dans le pont répliquant pour diminuer le débit descendant vers les terminaux distants et diminuer la complexité du traitement dans ces terminaux.

Dans le cadre des extensions hiérarchiques du codeur/décodeur UIT-T G.711, une autre technique de mixage - le mixage partiel - a été proposée. Cette technique est décrite dans le document intitulé "ITU-T G.711.1: Extending G.711 to Higher-Quality Wideband Speech" des auteurs Hiwasaki Yusuke, Ohmuro Hitoshi, dans IEEE Communications Magazine vol. 47, N°10, October 2009.

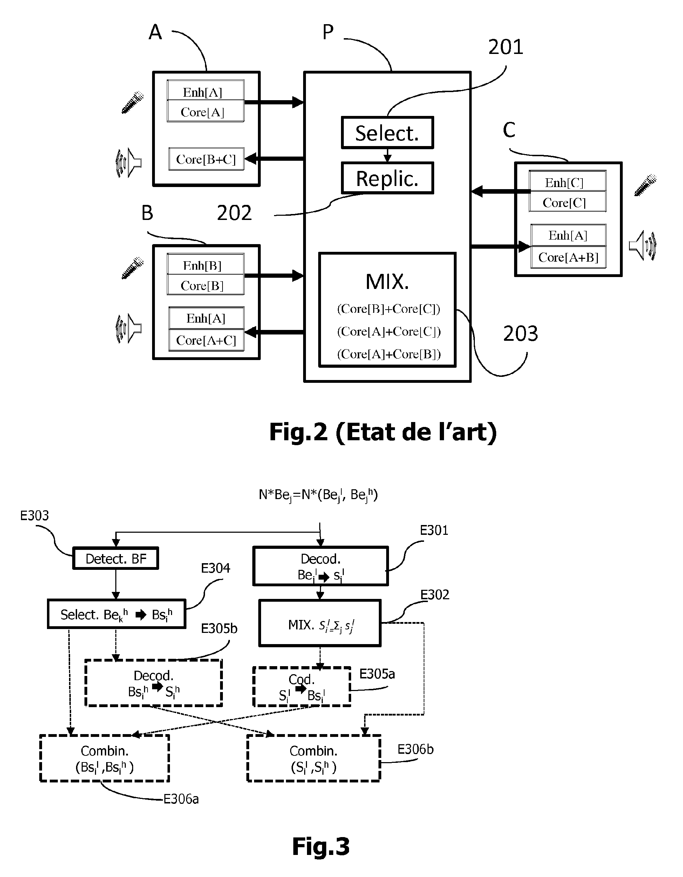

Cette technique tire profit de la structure hiérarchique en sous-bandes: plutôt que de décoder entièrement les flux binaires, seules les couches coeurs (compatible G.711) sont décodées et mixées, avant d'être ré-encodées, les couches d'amélioration (basse et haute) ne sont pas décodées. Au lieu de cela, un seul flux est sélectionné parmi tous les flux entrants et seules les couches d'amélioration de ce flux sélectionné sont retransmises aux autres terminaux distants avec les couches coeurs mixées et ré-encodées. Le terminal dont les couches d'amélioration sont répliquées ne reçoit que les couches coeurs mixées des autres terminaux. Le mixage partiel est donc une approche hybride entre la réplication avec sélection d'un seul flux et le mixage, avec un mixage par recombinaison directe des signaux décodés de la sous-bande basse correspondant à la couche coeur. La **figure 2** illustre le fonctionnement du mixage partiel appliqué au G.711.1.

On peut voir en effet que les terminaux A, B et C envoient chacun un flux audio comportant une couche coeur (Core) et au moins une couche d'amélioration (Enh) à un pont (MCU) P. Ce pont comporte un premier module 203 qui effectue un mixage des couches coeurs. Ainsi, pour le terminal A, le mixage s'effectue par addition des couches coeurs décodées des flux en provenance de B et de C (core[B]+core[C]), pour le terminal B, le mixage s'effectue par addition des couches coeur décodées des flux de A et de C (core[A]+core[C]) et pour le terminal C, le mixage s'effectue en additionnant les couches coeurs décodées des flux de A et de B (core[A]+core[B]).

Le module de sélection 201 du MCU, sélectionne un flux dit de réplication parmi les flux entrants selon un des critères définis ci-dessus. Sur cette figure, c'est le flux en provenance de A qui est choisi. La ou les couches d'amélioration de ce flux (Enh[A]) est ou sont répliquées (par le module de réplication 202) et transmises aux terminaux autres que le terminal A, en complément du flux mixé codé.

L'application du mixage partiel aux extensions hiérarchiques permet de réduire notablement la complexité de la combinaison des flux. En effet si le décodage des signaux des couches coeurs et le ré-encodage de leurs sommes par le codec G.711 est peu complexe, le codage et le ré-encodage des couches d'amélioration l'est plus.

Cette méthode de mixage partiel permet donc de réduire considérablement la complexité tout en garantissant la continuité du mixage au niveau de la couche coeur car seules les couches d'amélioration d'un flux sont commutées.

Bien que la technique de mixage partiel ait été décrite dans le cas de codeurs hiérarchiques en sous-bandes avec un codage coeur G.711 (codeur propriétaire NTT UEMCLIP, codeur UIT-T G.711.1) en ne répliquant une partie du flux binaire que d'une seule voie d'entrée, on comprend que la combinaison d'un mixage pour une partie du flux binaire et de la réplication pour une autre partie du flux binaire que d'une seule voie d'entrée peut être appliquée à d'autres codeurs tels que le codeur UIT-T G.722, G.729.1 ou le codeur OPUS décrit dans la RFC 6716 de l'IETF (Valin, JM., Vos, K., and T. Terriberry, "Definition of the Opus Audio Codec", RFC 6716, September 2012.).

De même, lorsque le débit le permet, on peut ne pas limiter la réplication à une seule voie d'entrée mais répliquer une partie du flux binaire de plus d'une voie d'entrée.

La sélection du flux dont les couches d'amélioration sont répliquées reste un des problèmes à résoudre dans le mixage partiel.

De façon classique, la sélection du flux à répliquer s'effectue soit par détection d'activité vocale pour déterminer si le flux est actif ou non, soit par détermination de l'énergie du flux en sélectionnant le flux le plus énergique.

Cependant, la sélection du flux à répliquer selon un critère énergétique et/ou d'activité vocale peut entrainer des commutations de la bande passante audio désagréables à l'oreille. En effet, de par l'hétérogénéité des communications, des flux quoique codés par des codeurs HD (pour haute définition) peuvent ne pas comporter de contenus HD.

Les codecs HD sont en effet capables de compresser efficacement la voix sur une large bande de fréquences. Ils permettent de transmettre la voix en qualité "Haute Définition" (HD) encodée sur une plage de fréquence allant de 50Hz à 7kHz (la bande élargie).

La voix HD vise à fournir une qualité et un confort d'écoute inconnus jusqu'à présent sur les réseaux téléphoniques classiques. Ses avantages pour les usagers sont d'une part fonctionnels; l'élargissement de la bande de fréquence accroissant l'intelligibilité, le confort d'écoute favorisant les conversations longues; mais également d'ordre émotionnel. Le rendu de la majeure partie du spectre de parole assure en effet la fidélité de la voix et une véritable sensation de présence. A terme, la voix "super-HD" (superwideband SWB) jusqu'à 15kHz voire "Hifi" (ou fullband FB) sur la totalité de la bande de fréquences audibles [20Hz-20kHz] est envisagée.

La Voix HD requiert une chaîne de communication compatible de bout en bout, c'est-à-dire du microphone à l'écouteur du terminal distant. Elle s'appuie sur des formats de codage garantissant la qualité bande élargie et qui étant normalisés assurent l'interopérabilité entre les différents éléments de la chaîne. Dans l'industrie des télécommunications, trois formats sont employés: le codeur UIT-T G.722 décrit par exemple dans le document " Rec. ITU-T G.722, 7 kHz audio-coding within 64 kbit/s, Nov. 1988", le codeur UIT-T G.711.1 décrit par exemple dans le document "Rec. IUT-T G.711.1, Wideband embedded extension for G.711 pulse code modulation, 2008", pour les communications en bande élargie sur réseaux fixes et le codeur 3GPP AMR-WB décrit par exemple dans le document "3GPP TS 26.190 V10.0.0 (2011-03) 3rd Generation Partnership Project; Technical Spécification Group Services and System Aspects; Speech codec speech processing functions; Adaptive Multi-Rate - Wideband (AMR-WB) speech codec; Transcoding functions (Release 10)" pour celles sur réseaux mobiles. Schématiquement la mise sur le marché de la Voix HD fait appel à deux composantes. Il faut tout d'abord un réseau de télécommunication compatible avec les codeurs en bande élargie - autrement dit transparent à ces formats de codage - et à Qualité de Service garantie. Il faut aussi des terminaux qui embarquent le codeur bande élargie, inter-opèrent avec le réseau et dont les caractéristiques acoustiques préservent la qualité Voix HD.

Le dynamisme du secteur de la communication multimédia et l'hétérogénéité des réseaux, accès et terminaux ont engendré une prolifération de formats de compression. Il existe de nombreuses méthodes de compression des signaux média pour réduire le débit tout en maintenant une bonne qualité.

La présence dans les chaînes de communication de différents formats de compression nécessite plusieurs codages en cascade (transcodage). Le transcodage est nécessaire lorsque dans une chaîne de transmission, une trame de signal compressée émise par un codeur ne peut plus poursuivre son chemin, sous ce format. Le transcodage permet de convertir cette trame sous un autre format compatible avec la suite de la chaîne de transmission. La solution la plus élémentaire (et la plus courante à l'heure actuelle) est la mise bout à bout d'un décodeur et d'un codeur. La trame compressée arrive sous un premier format, elle est décompressée. Ce signal décompressé est alors compressé à nouveau sous un second format accepté par la suite de la chaîne de communication. Cette mise en cascade d'un décodeur et d'un codeur, est appelée un tandem.

Il faut noter que lors d'un tandem, des codeurs codant des gammes de fréquence différentes peuvent être mis en cascade. Ainsi, un codeur bande élargie peut être amené à coder un contenu audio de bande plus restreinte que la bande élargie. Par exemple, le contenu à coder par les codeurs HD fixes (G.722 et G.711.1) bien qu'échantillonné à 16 kHz peut n'être qu'en bande téléphonique car codé précédemment par un codeur bande étroite (comme le standard UIT-T G.711). Il se peut aussi que la qualité limitée de l'acoustique du terminal émetteur ne permette pas de couvrir toute la bande élargie.

On voit donc que la bande audio d'un flux codé par un codeur fonctionnant sur des signaux échantillonnés à une fréquence d'échantillonnage donnée peut être bien plus restreinte que celle supportée par le codeur. Or dans bien des applications, la connaissance de la bande audio d'un contenu à traiter - en particulier la prise en compte de la présence d'une bande de fréquence prédéterminée dans le flux codé (la présence d'une bande de fréquence indiquant qu'il y a un contenu pertinent) - est utile.

Ainsi dans le cas d'une communication multi-parties, le mixage partiel tel que décrit précédemment, basé sur le seul critère énergétique pourra conduire à commuter la bande d'amélioration d'un contenu effectivement HD à celle d'un contenu bande étroite NB et réciproquement. Par exemple si le contenu du terminal A représenté à la figure 2, n'est pas HD et que celui du terminal B l'est, le terminal C reçoit un flux avec des changements de bande audio très perceptibles et nuisibles au confort d'écoute et à l'intelligibilité sur la voix de B, lors des changements de terminal « répliqué » (terminal dont une partie des couches est répliquée). De même lorsqu'un terminal cesse d'être répliqué, il peut alors recevoir un flux avec du contenu HD alors qu'auparavant il ne recevait qu'un signal mixé et donc limité à la sous-bande basse.

Il existe donc un besoin d'améliorer le confort d'écoute lors d'un changement de flux répliqué dans le cadre d'un mixage partiel.

## EXPOSÉ DE L'INVENTION

La présente invention vient améliorer la situation.

Elle propose à cet effet, un procédé de combinaison d'une pluralité de flux audio codés selon un codage en sous-bandes de fréquence, comportant les étapes suivantes:

- décodage d'une partie des flux codés sur au moins une sous-bande de fréquence;
- addition des flux ainsi décodés pour former un flux mixé;
- sélection parmi la pluralité de flux audio codés, d'au moins un flux codé de réplication, sur au moins une sous-bande de fréquence différente de celle de l'étape de décodage.

Le procédé est tel que la sélection du au moins un flux codé de réplication s'effectue selon un critère prenant en compte la présence d'une bande de fréquence prédéterminée dans le flux codé.

Ainsi, le flux de réplication associé à un flux mixé est sélectionné de façon à ce que la bande de fréquence souhaitée soit incluse. Il n'y a donc pas de disparité de bande passante lors d'une commutation d'un flux répliqué à un autre, ce qui améliore la qualité du flux audio résultant et le confort d'écoute de l'utilisateur réceptionnant le flux audio résultant du procédé.

Les différents modes particuliers de réalisation mentionnés ci-après peuvent être ajoutés indépendamment ou en combinaison les uns avec les autres, aux étapes du procédé de combinaison défini ci-dessus.

Dans un mode de réalisation particulier, le procédé comprend en outre une étape de présélection des flux audio codés selon un critère prédéterminé.

La présélection permet de diminuer le nombre de flux à mixer et donc de diminuer la complexité du mixage. De plus, la vérification de la présence de la bande de fréquence prédéterminée s'effectue alors sur un nombre plus restreint de flux, ce qui diminue encore la complexité du procédé.

Le critère prédéterminé peut par exemple être un critère d'énergie et/ou d'activité vocale.

Dans un mode de réalisation, dans le cas où plusieurs flux codés sont sélectionnés à l'étape de sélection, une sélection supplémentaire de flux codé de réplication est effectuée sur un critère de précédence de sélection des flux.

Cette sélection supplémentaire permet de réduire le nombre de flux à prendre en compte et d'éviter trop de commutation de flux dans le temps. Le fait de garder le plus possible le même flux répliqué permet d'assurer une continuité et une transition douce.

Dans une application possible sur un pont central (MCU) gérant plusieurs terminaux, le procédé comporte en outre une étape de ré-encodage du flux mixé et une étape de combinaison au flux de réplication sélectionné.

Dans un mode de réalisation particulier, l'étape de décodage s'effectue sur des sous-bandes de fréquence basses et la bande de fréquence prédéterminée du critère de sélection est une bande de fréquence supérieure auxdites sous-bandes de fréquence basses.

Ceci est notamment applicable dans les codeurs sous-bandes qui permettent d'obtenir du contenu HD. La présence de ce contenu HD dans le flux codé conditionne sa sélection pour constituer le flux audio à transmettre. Ceci est aussi applicable dans les codeurs tels que le codeur décrit dans RFC6716 de l'IETF qui comporte un mode hybride où les basses fréquences (<8 kHz) sont codées par une technologie de codage à prédiction linéaire et les hautes fréquences par une technologie de codage par transformée.

Dans une variante de réalisation, le procédé comporte une étape préalable de classification des flux audio codés et le flux codé de réplication sélectionné est le premier flux dans cet ordre de classification dans lequel la bande de fréquence prédéterminée a été détectée.

Ainsi, il n'est pas nécessaire d'analyser tous les flux codés. Il suffit de sélectionner le premier flux contenant une bande de fréquence prédéterminée.

Dans un mode de réalisation de l'invention, la présence d'une bande de fréquence prédéterminée dans un flux codé s'effectue par une comparaison d'énergie, dans les différentes sous-bandes de fréquence, des flux audio décodés.

Ceci est applicable dans tout type de codage en sous bandes comme le codage de type G.722 ou G.711.1. En contrepartie, cette technique nécessite un décodage des flux.

Pour certaines technologies de codage, des méthodes de détection de la présence ou non d'une bande de fréquence (contenu pertinent) qui ne nécessitent pas un décodage complet des flux ont été proposées. Par exemple, pour les codeurs par transformée ou en-sous bandes tels les codeurs MPEG (e.g. MP3, AAC, ...) dont le flux codé comporte des coefficients spectraux codés, comme par exemple, les coefficients MDCT dans le codeur MP3, le document "Liaoyu Chang, Xiaoqing Yu, Haiying Tan, Wanggen Wan, Research and Application of Audio Feature in Compressed Domain, IET Conférence on Wireless, Mobile and Sensor Networks, 2007; (CCWMSN07), Page(s): 390 - 393, 2007", propose plutôt que de décoder tout le signal, de ne décoder que les seuls coefficients pour déterminer les caractéristiques du signal codé - telle que la largeur de bande du contenu audio codé. Préférentiellement, l'invention utilise une méthode de détection sans décodage complet des flux lorsqu'une telle méthode existe pour la technologie de codage utilisée. Ceci permet alors de réduire notablement la complexité de la détection. Avantageusement, les résultats de ces décodages partiels sont sauvegardés en mémoire pour une utilisation ultérieure lors du décodage complet des flux audio à mixer.

Dans un autre mode de réalisation de l'invention, la présence d'une bande de fréquence prédéterminée dans un flux codé s'effectue selon les étapes suivantes:

- détermination par sous-bande de fréquence d'un ensemble prédéterminé de sous-bandes, d'un signal estimé à partir du flux codé;
- détermination par sous-bande de fréquence de l'ensemble prédéterminé de sous-bandes, de paramètres non codés représentatifs du contenu audio, à partir du signal estimé correspondant;
- calcul d'au moins un critère local à partir des paramètres déterminés;
- décision quant à la présence d'une bande de fréquence prédéterminée dans au moins une sous-bande du contenu audio en fonction du au moins un critère local calculé.

Ceci est applicable par exemple pour un codage de type G.722 et permet d'éviter le décodage des flux audio. Avantageusement, au moins une partie des paramètres déterminés, représentatifs du contenu audio, est sauvegardée en mémoire pour une utilisation ultérieure lors du décodage des flux audio à mixer.

L'invention s'applique également à un dispositif de combinaison d'une pluralité de flux audio codés selon un codage en sous-bandes de fréquence, comportant:

- un module de décodage d'une partie des flux codés sur au moins une sous-bande de fréquence;
- un module d'addition des flux ainsi décodés pour former un flux mixé;
- un module de sélection, parmi la pluralité de flux audio codés, d'au moins un flux codé de réplication, sur au moins une sous-bande de fréquence différente de celle de l'étape de décodage. Le dispositif est tel que la sélection du au moins un flux codé de réplication s'effectue selon un critère prenant en compte la présence d'une bande de fréquence prédéterminée dans le flux codé.

Le dispositif a les mêmes avantages que ceux du procédé qu'il met en oeuvre.

L'invention se rapporte à un pont de conférence comportant un dispositif de combinaison tel que décrit ainsi qu'à un terminal de communication, une passerelle de communication comportant un dispositif de combinaison tel que décrit.

Ce dispositif présente les mêmes avantages que le procédé décrit précédemment, qu'il met en oeuvre.

L'invention vise un programme informatique comportant des instructions de code pour la mise en oeuvre des étapes du procédé de combinaison tel que décrit, lorsque ces instructions sont exécutées par un processeur.

Enfin l'invention se rapporte à un support de stockage, lisible par un processeur, intégré ou non au dispositif de combinaison, éventuellement amovible, mémorisant un programme informatique comprenant des instructions de code pour l'exécution des étapes du procédé de combinaison tel que décrit précédemment.

D'autres caractéristiques et avantages de l'invention apparaîtront plus clairement à la lecture de la description suivante, donnée uniquement à titre d'exemple non limitatif, et faite en référence aux dessins annexés.

## DESCRIPTION DES FIGURES

- la figure 1a décrite précédemment, illustre le principe de fonctionnement d'un pont répliquant selon l'état de l'art;
- la figure 1b décrite précédemment illustre le principe de fonctionnement d'un pont de mixage selon l'état de l'art;
- la figure 2 décrite précédemment, illustre le principe de fonctionnement du mixage partiel selon l'état de l'art, appliqué au codage de type G.711.1;
- la figure 3 illustre les étapes principales du procédé de combinaison selon un mode de réalisation de l'invention;
- la figure 4 illustre un codeur de type G.722 délivrant des flux aptes à être combinés selon le procédé de l'invention;
- la figure 5a illustre les étapes d'un mode particulier de réalisation pour des flux codés de type G.722 et mises en oeuvre dans un pont centralisé;
- la figure 5b illustre les étapes du mode de réalisation particulier pour des flux codés de type G.722 et mises en oeuvre dans un terminal;
- la figure 6 illustre un codeur de type G.711.1 délivrant des flux aptes à être combinés selon le procédé de l'invention;
- la figure 7 illustre les étapes d'un mode particulier de réalisation pour des flux codés de type G.711.1 et mises en oeuvre dans un pont centralisé;
- les figures 8a et 8b illustrent des représentations matérielles de dispositifs de combinaison selon des modes de réalisation de l'invention; et
- la figure 9 illustre les étapes mises en oeuvre dans un mode de réalisation pour l'étape de détection d'une bande de fréquence prédéterminée selon l'invention.

## MODES DE RÉALISATION DE L'INVENTION

La figure 3 illustre les principales étapes d'un mode de réalisation du procédé de combinaison selon l'invention. A partir d'une pluralité (N) de flux codés (Be$_j$) selon une méthode de codage par sous-bandes de fréquence, le procédé comporte une étape de décodage en E301 d'une partie des flux codés reçus et sur au moins une sous-bande de fréquence. Ainsi, à partir des flux binaires $Be_j^l$ d'au moins une sous-bande de fréquence, par exemple la sous-bande basse fréquence, on obtient à l'issue de ce décodage les signaux reconstruits $s_j^l$ de la sous-bande de fréquence basse.

A l'étape E302, un mixage de ces flux est effectué sur cette au moins une sous-bande de fréquence. Les flux décodés sont donc additionnés pour former un signal mixé $S_i^l = \sum_j s_j^l$ (avec $0 \leq j < N$, et dans le cas du pont centralisé $j \neq i$). Dans une étape optionnelle E305a, le signal mixé $S_i^l$ est codé pour obtenir un flux $Bs_i^l$.

A partir des flux codés reçus, une étape E304 de sélection d'au moins un flux codé de réplication est effectuée. Cette sélection s'effectue sur au moins une sous-bande de fréquence différente de celle(s) utilisée(s) pour l'étape de décodage. Pour mettre en oeuvre cette sélection selon l'invention, une étape E303 est mise en oeuvre pour détecter la présence d'une bande de fréquence prédéterminée dans le flux codé. Par exemple, la présence d'un contenu en bande haute fréquence conditionne la sélection du flux codé qui la contient. Le flux sélectionné $Be_k^h$ constitue alors un flux de réplication $Bs_i^h$ à combiner à l'étape optionnelle de combinaison E306a des flux binaires au flux mixé codé $Bs_i^l$ obtenu à l'étape E305a : $(Bs_i^l, Bs_i^h)$. En variante ou en complément, le flux de réplication $Bs_i^h$ est décodé à l'étape optionnelle E305b pour obtenir un signal décodé $S_i^h$ à combiner à l'étape optionnelle de combinaison E306b au signal mixé $S_i^l$ (obtenu à l'étape E302) : $(S_i^l, S_i^h)$.

Par souci de concision, on décrit par la suite le cas où la bande de fréquence prédéterminée à détecter dans un flux codé est une bande haute fréquence. Il est évident pour l'homme du métier d'adapter cette détection à d'autres types de bande de fréquence, par exemple à une bande basse fréquence ou encore à une bande de fréquence d'une plage de valeurs prédéfinie.

Ainsi, un premier mode de réalisation est maintenant décrit pour des flux audio qui ont été codés selon une méthode de codage de type normalisé UIT-T G.722.

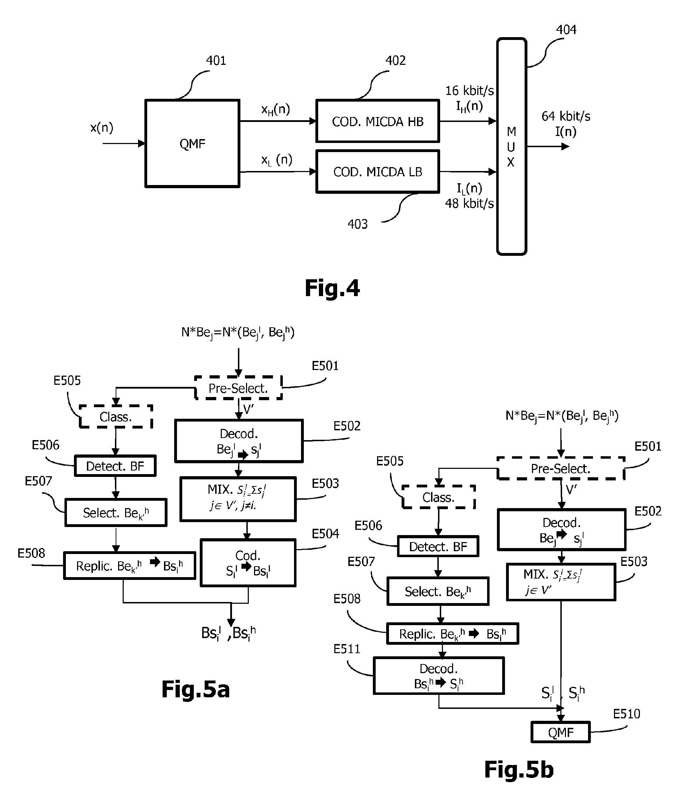

La **figure 4** illustre ce mode de codage. Il est aussi décrit dans le document cité précédemment: " Rec. ITU-T G.722, 7 kHz audio-coding within 64 kbit/s, Nov. 1988".

Le codeur G.722 code le signal d'entrée (x(n)) échantillonné à 16 kHz en deux sous-bandes échantillonnées à 8 kHz. La division en sous-bandes est faite par un filtre miroir en quadrature (QMF pour "*Quadrature Mirror Filter*" en anglais) par le module 401. A partir de deux échantillons d'entrée le filtre QMF donne en sortie un échantillon x$_L$(n) de bande basse (0-4000 Hz) et un échantillon x$_H$(n) de bande haute (4000-8000 Hz). Les signaux des 2 sous-bandes sont codés indépendamment par des codeurs MICDA (Modulation par Impulsions et Codage Différentiel Adaptatif) 402 et 403.

Les indices des deux erreurs de prédiction quantifiées I$_H$(n) et I$_L$(n) sont ainsi transmis dans le flux binaire I(n) après multiplexage en 404. Le codeur G.722 a trois débits: 64, 56 et 48 kbit/s. Chaque échantillon de la sous-bande basse est codé sur 6 bits au plus haut débit (48 kbit/s), sur 5 bits au débit intermédiaire (40 kbit/s), et sur 4 bits au plus bas débit (32 kbit/s). Au plus haut débit, le flux codé de la sous-bande basse est constitué de la couche coeur à 4 bits par échantillon et de deux couches d'amélioration à 1 bit par échantillon chacune. La sous-bande haute est toujours codée sur 2 bits (16 kbit/s) par échantillon indépendamment du débit.

Un premier exemple de réalisation est illustré à présent à la **figure 5a** qui représente les étapes du procédé selon l'invention, mises en oeuvre dans un dispositif de mixage partiel en architecture centralisée recevant des flux codés par le codeur UIT-T G.722 à 64 kbit/s. Comme mentionné précédemment, ce codeur est un codeur en sous-bandes, les signaux des deux (*M*=2) sous-bandes étant codés par la technologie MICDA.

A partir de *N* flux binaires hiérarchiques (encore appelées ci-après voies d'entrée), codés dans ce mode de réalisation par le G.722 à 64 kbit/s, une étape optionnelle E501 de présélection de *N'* flux est mise en oeuvre.

Cette étape de présélection permet de sélectionner parmi les différentes voies d'entrée, celles qui respectent un ou plusieurs des critères de sélection décrits précédemment pour les méthodes de l'état de l'art. Par exemple, à partir de la détection d'activité vocale, le critère FCFS (pour "First Come First Serve" en anglais) est utilisé pour sélectionner les flux. Ou bien, à partir de la mesure de la puissance du signal ou de son énergie, le critère LT (pour "Loudest Talker" en anglais) est utilisé pour sélectionner les flux avec une intensité la plus forte.

Ainsi, une partie des flux codés reçus par le dispositif de combinaison ou pont de mixage est pris en compte pour mettre en oeuvre le procédé de combinaison. Ceci réduit donc la complexité de mise en oeuvre des étapes du procédé puisque le nombre de voies à combiner est restreint. Cette étape de présélection est optionnelle et l'étape de décodage E502 peut alors s'appliquer à l'ensemble N des flux audio codés d'entrée.

Par la suite, pour souci de clarté, nous utiliserons la notation N' (avec N'≤N) que cette étape optionnelle soit mise en oeuvre ou non et nous noterons V' l'ensemble des indices de ces voies.

L'étape E502 de décodage des N' flux dans la sous-bande basse, est ensuite mise en oeuvre. En variante, particulièrement avantageuse si l'étape E502 est peu complexe, l'étape de présélection E501 peut être effectuée après cette étape de décodage E502 de tous les flux d'entrée sous-bande basse.

Ou encore, en complément, une seconde étape de présélection peut être effectuée après cette étape de décodage pour éventuellement restreindre davantage le nombre de voies en prendre en compte dans la sélection d'un flux sous-bande haute à répliquer (étapes E505 à E507) et/ou de mixage de sous-bande bande basse (étape E503).

Pour ces N' flux audio codés, on note pour chaque voie *j*(*j* ∈ *V'*):

- $Be_j^l$ le flux binaire sous-bande basse entrant (composé de la couche coeur et de deux couches d'amélioration);

- $Be_j^h$ le flux binaire sous-bande haute entrant.

A l'étape de décodage E502, le signal reconstruit $s_j^l$ de la sous-bande basse est obtenu en décodant le flux $Be_j^l$.

A l'étape E503, une procédure de mixage des flux binaires ainsi décodés est effectué par addition de signaux ainsi reconstruits de la sous-bande basse: $S_i^l = \sum s_j^l$ *avec j* ∈ *V'*, *j*≠*i*. A noter que si i ∈ *V'*, $S_i^l$ est la somme de N'-1 signaux, sinon $S_i^l$ est la somme de N' signaux.

Le flux binaire de sortie sous-bande basse $(BS_i^l)$ destiné à être transmis à un terminal Ti (0≤*i*<*N*) est alors obtenu par codage à l'étape E504, par l'encodeur sous-bande basse du G.722 (MICDA sur 6 bits), de ce signal somme $S_i^l$.

A partir de l'ensemble N' de voies d'entrée, une étape de détection d'une bande de fréquence prédéterminée E506 est effectuée. Dans ce mode de réalisation, la bande de fréquence prédéterminée est la bande haute fréquence. Cela permet de déterminer la présence d'un contenu HD dans le flux codé. Ainsi, une analyse du contenu audio des voies d'entrée est effectuée.

Différents modes de détection de la présence de la bande haute fréquence sont possibles. Par exemple, la méthode de détection d'un contenu HD dans un flux *j* peut utiliser une comparaison de l'énergie du signal reconstruit de la sous-bande haute, $s_j^h$, avec celle du signal reconstruit de la sous-bande basse $s_j^l$. Ce mode de réalisation nécessite un décodage du flux audio à analyser dans la sous-bande haute, en plus du décodage de la sous-bande basse.

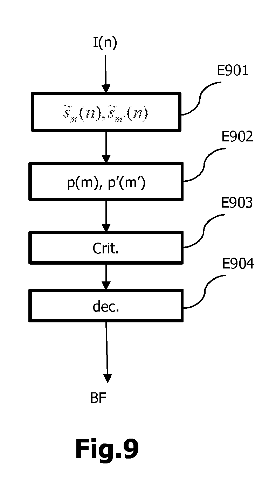

En alternative, pour éviter le décodage des signaux de la sous-bande haute, un procédé de détection à faible coût algorithmique peut être mis en oeuvre. Ce procédé est décrit ultérieurement en référence à la figure 9.

A l'étape E507, une sélection d'au moins un flux codé k' ayant du contenu HD est effectuée. Dans le cas où plusieurs flux codés comportent du contenu HD, une sélection supplémentaire, non représenté à la figure 5a, peut être mise en oeuvre. Cette sélection supplémentaire peut par exemple se baser sur un critère de précédence de sélection du flux audio codé. Ainsi, le flux le plus récemment répliqué est choisi. Bien entendu, d'autres critères sont possibles ; par exemple, selon les énergies des signaux de la sous-bande basse obtenus à l'étape E502.

La sélection de la sous-bande haute du flux codé k' comportant du contenu HD est ainsi effectuée à l'étape E507 et constitue le flux audio de sortie $Bs_i^h = Be_{k'}^h$. Ce flux binaire sous-bande haute ($Bs_i^h$) est répliqué à l'étape E508 pour être transmis vers un terminal $Ti$ avec $i \neq k'$ en même temps que le flux mixé codé sous-bande basse ($Bs_i^l$).

Dans le cas où plusieurs flux de réplication ont été sélectionnés à l'étape E507, ces flux sont répliqués et combinés au flux mixé sous-bande basse.

Dans une autre variante de réalisation, une étape de classification des voies d'entrée est effectuée en E505, avant l'étape de détection de la bande de fréquence. La classification peut par exemple se faire de la voie la plus récemment répliquée à celle la plus anciennement répliquée ou en fonction des énergies des signaux de la sous-bande basse obtenus à l'étape E502. Cette étape E505 peut bien évidemment utiliser un autre critère de classement des voies d'entrée. Par exemple, l'ordre selon le séquencement de réplication peut être pondéré par le critère utilisé à l'étape 501 ou bien encore selon les énergies des signaux de la sous-bande basse décodés.

L'analyse faite à l'étape E506 s'effectue alors sur les flux des voies d'entrée classées dans l'ordre déterminé à l'étape de classification E505. Dès qu'un flux HD a été détecté, l'analyse s'arrête.

L'étape E505 est optionnelle et peut s'effectuer soit sur les N voies d'entrée, soit sur les N' voies d'entrée après application de l'étape de présélection E501.

Dans le cas où l'étape E501 de présélection est effectuée et dans le cas où aucun des flux présélectionnés ne contient de contenu HD détecté à l'étape E506, alors, la détection se fait sur les flux d'entrée non encore analysés pour trouver l'existence d'au moins un flux qui comporte la bande de fréquence prédéterminée. S'il en existe un, c'est alors celui-ci qui est sélectionné à l'étape E507.

Avantageusement, une mutualisation des étapes peut être mise en oeuvre. Par exemple, l'étape de détection telle que décrite ultérieurement en référence à la figure 9, utilise un paramètre de détection d'activité vocale qui peut aussi être utilisé pour l'étape E501 de présélection. On comprendra alors que les étapes E501 et E506 peuvent être combinées et qu'une partie au moins de leurs calculs et paramètres peut être mutualisée. De même lorsque l'étape E506 fournit une information sur la fiabilité de la détection, cette information est avantageusement utilisée par l'étape E505 de classification des voies d'entrée.

Dans un mode particulier de réalisation, le terminal dont le flux est répliqué (k' ici), ne reçoit pas de flux sous-bande haute puisque le flux sous-bande haute sélectionné à l'étape E507 est celui en provenance de ce terminal. Pour ce terminal, dans une variante de réalisation, une étape de sélection d'un deuxième flux HD à répliquer k" peut être effectuée pour cette sortie. On a alors : $Bs_{k'}^h = Be_{k''}^h$, $k'' \neq k'$.

Le mode de réalisation décrit en référence à la **figure 5b**, décrit la mise en oeuvre de l'invention dans un terminal en communication multi-parties, en architecture maillée ou en architecture centralisée utilisant un pont répliquant.

Dans ce mode de réalisation, les étapes E501, E502, E503, E505, E506, E507 et E508 sont les mêmes que celles décrites en référence à la figure 5a.

Ici, c'est un terminal $i$ qui reçoit $N$ voies d'entrée ($N$ flux binaires hiérarchiques codés par le G.722 à 64 kbit/s).

Comme précédemment, nous utilisons la notation N' (avec N'≤N) que l'étape optionnelle E501 soit mise en oeuvre ou non et nous notons V' l'ensemble des indices de ces voies d'entrée.

Dans ce mode de réalisation, le procédé utilise à l'étape E506 la technique décrite ultérieurement en référence à la figure 9, pour effectuer la détection d'un contenu HD sur une voie d'entrée $j$. Il n'y a donc pas de reconstruction du signal dans la sous-bande haute. Dans un mode particulier de réalisation, les paramètres déterminés à partir de l'estimation du signal selon cette technique de détection sont aussi utilisés dans certaines étapes du procédé de ce mode de réalisation, et notamment l'étape de décodage du flux sélectionné et aussi des flux dans les sous-bandes basses. En effet, ces paramètres ne sont alors plus à décoder, ce qui diminue la complexité des étapes de décodage.

Ainsi une analyse du contenus audio d'un sous-ensemble de $N'$ flux binaires d'entrée pour détecter un contenu HD est effectué à l'étape E506, dans le cas où l'étape de présélection E501 est mise en oeuvre. Une voie $k'$ est sélectionnée en E507 parmi les $N'$ voies d'entrée et le flux binaire de la sous-bande haute $Be_k^h$ de cette voie est répliqué, à l'étape E508, comme flux binaire pour la sous-bande haute $Bs_i^h$ pour le terminal $i$ : $Bs_i^h = Be_k^h$.

D'autre part, à l'étape E502, sont obtenus les N' signaux sous-bande basse $s_j^l$ par décodage des flux binaires sous-bande basse $Be_{ji}^l$, $j \in V'$.

Dans ce mode de réalisation, à l'étape E503, le signal sous-bande basse $S_i^l$ est obtenu par addition des $N'$ signaux reconstruits de la sous-bande basse : $S_i^l = \Sigma s_j^l$ ; $j \in V'$. A la différence de la figure 5a, ici $S_i^l$ est toujours la somme de N' signaux ; en effet, le terminal ne reçoit pas son propre flux.

A l'étape E511, le signal sous-bande haute $S_i^h$ est obtenu par décodage par le décodeur G.722 sous-bande haute du flux binaire sous-bande haute $Bs_i^h$ obtenu à l'étape E508 par réplication du flux $Be_k^h$ sélectionné à l'étape E507.

Enfin, le signal reconstruit bande élargie est obtenu en E510 par filtrage QMF de synthèse G.722 des deux signaux sous-bande basse $S_i^l$ et sous-bande haute $S_i^h$.

Dans ces deux modes de réalisation, l'étape de présélection E501 permet de réduire le nombre de flux à prendre en compte pour l'analyse à effectuer en E506 mais aussi pour le décodage des flux binaires sous-bande basse de l'étape E502 et pour le mixage de l'étape E503. Ceci permet de réduire donc globalement la complexité du procédé de combinaison. Comme dans le cas précédent, la présélection peut être effectuée en variante ou en complément après l'étape de décodage.

Ainsi, dans ce mode de réalisation, un flux binaire de la sous-bande haute d'une seule voie d'entrée est sélectionné pour être décodé par le décodeur sous-bande haute du G.722 (décodeur MICDA à 2 bits par échantillon), les flux binaires des deux couches d'amélioration de la sous-bande basse des voies d'entrée sont décodés avec celui de la couche coeur pour obtenir les signaux décodés de la sous-bande basse qui sont additionnés.

Une technique possible de détection d'une bande de fréquence prédéterminée dans un flux audio codé selon le codage G.722 est maintenant décrite en référence à la **figure 9.** Une étape E901 détermine dans un premier temps, par sous-bande de fréquence d'un ensemble prédéterminé de sous-bandes de fréquence, un signal estimé à partir du flux binaire. Pour cela, sont mises en oeuvre des étapes d'obtention d'un paramètre d'adaptation associé à l'indice de quantification pour un échantillon courant n et de calcul d'un signal estimé pour l'échantillon courant à partir de ce paramètre d'adaptation déterminé, du signal estimé pour l'échantillon précédent et d'un facteur d'oubli prédéfini. Un exemple de réalisation d'une telle technique de détermination d'un signal estimé est décrit dans la demande de brevet française FR 11 52596.

Ce signal estimé est représentatif du contenu audio qui a été codé. L'ensemble prédéterminé de sous-bandes, c'est-à-dire les sous-bandes considérées pour estimer ces signaux représentatifs ainsi que leur nombre M, peuvent être prédéfinis ou peuvent évoluer au cours du temps.

Par la suite, on notera ce signal estimé pour une sous-bande m ($0 \leq m < M$):

$\tilde{s}_m(n)$, $n = 0, ..., N_m - 1$, $N_m$ étant le nombre d'échantillons dans une sous-bande m.

Une étape E902 de détermination de paramètres non codés représentatifs du contenu audio est ensuite mise en oeuvre. Ces paramètres p(m) sont déterminés par sous-bande de fréquence de l'ensemble prédéterminé de sous-bandes, à partir du signal estimé dans les sous-bandes correspondantes.

Plusieurs types de paramètres peuvent être calculés. Quelques exemples en sont donnés ci-après.

Pour une sous-bande $m$, un paramètre peut être déterminé par exemple à partir d'une norme du signal estimé (ou une puissance de cette norme). De tels paramètres sont donnés ci-dessous pour une bande $m$ donnée ($0 \leq m < M$) :

$$L_\infty(m) = \max_{n=0,...,N_m-1}\left(\left|\tilde{s}_m(n)\right|\right) \ ; \ L_1(m) = \sum_{n=0}^{N_m-1}\left|\tilde{s}_m(n)\right| \ ; \ L_2(m) = \sum_{n=0}^{N_m-1}\tilde{s}_m(n)^2$$

Des versions « normalisées » peuvent être aussi utilisées, telles que :

$$L'_1(m) = \frac{1}{N_m}\sum_{n=0}^{N_m-1}\left|\tilde{s}_m(n)\right| \ ; \ L'_2(m) = \frac{1}{N_m}\sum_{n=0}^{N_m-1}\tilde{s}_m(n)^2$$

On peut aussi utiliser d'autres types de paramètres tels qu'un rapport : par exemple, le rapport entre le minimum et le maximum du signal estimé - en valeurs absolues ou non -:

$$\rho_{\min\max}(m) = \frac{\min\limits_{n=0,...,N_m-1}\left(\left|\tilde{s}_m(n)\right|\right)}{\max\limits_{n=0,...,N_m-1}\left(\left|\tilde{s}_m(n)\right|\right)} \ ; \ \rho'_{\min\max}(m) = \frac{\min\limits_{n=0,...,N_m-1}\left(\tilde{s}_m(n)\right)}{\max\limits_{n=0,...,N_m-1}\left(\tilde{s}_m(n)\right)}.$$

Evidemment, l'inverse de ce rapport peut être aussi considéré.

Dans un exemple de réalisation, un même paramètre est calculé pour différentes sous-bandes. Cependant un paramètre peut n'être calculé que sur un nombre plus restreint (éventuellement restreint à une seule sous-bande) de sous-bandes.

A partir d'au moins un de ces paramètres, l'étape E903 est mise en oeuvre pour calculer au moins un critère local.

Ce critère local peut être calculé à partir de paramètres d'une seule sous-bande ou de paramètres calculés sur plus d'une sous-bande. Pour distinguer ces deux catégories de critère nous les nommons selon le nombre de sous-bandes prises en compte lors du calcul, critère mono-bande et critère multi-bande.

Pour chaque catégorie, quelques exemples de critères sont détaillés ci-après.

Un critère mono-bande utilise une "distance" entre un paramètre $p(m)$ d'une sous-bande $m$ et un seuil $thresh_{mo}(m)$. Ce seuil peut être adaptatif ou non et peut dépendre éventuellement de la sous-bande considérée. On note alors d(m) le critère mono-bande tel que:

$$d(m) = dist\big(p(m), thresh_{mo}(m)\big)$$

Avantageusement, cette "distance" est la simple différence entre le paramètre $p(m)$ et ce seuil:

$$d(m) = dist\big(p(m), thresh_{mo}(m)\big) = p(m) - thresh_{mo}(m)$$

Par exemple, ces critères mono-bande peuvent être définis par les équations ci-dessous, sur les sous-bandes m et m', ($0 \leq m$, $m' < M$) :

$$crit0_{mo}(m) = dist(L_{\infty}(m), thresh0_{mo}(m)), \quad crit1_{mo}(m') = dist(L'_1(m'), thresh1_{mo}(m')),$$

où $thresh0_{mo}(m)$ et $thresh1_{mo}(m')$ sont des seuils -adaptatifs ou non - et pouvant dépendre de la sous-bande considérée.

On pourrait, par exemple, adapter le seuil sur la bande $m$ en fonction de la bande $m'$, ou en fonction d'un bloc d'échantillons précédent.

Un critère multi-bande compare des paramètres calculés sur au moins deux sous-bandes - par exemple, un paramètre $p(m)$ d'une sous-bande m et un paramètre $p'(m')$ d'une sous-bande $m'$.

Là aussi, comme dans le cas de critère mono-bande, un seuil $thresh_M(m,m')$ - adaptatif ou non - et dépendant éventuellement des sous-bandes considérées peut être utilisé.

Par exemple, ces critères multi-bande peuvent être définis par les équations ci-dessous, sur les sous-bandes m et $m'$, ($0 \leq m$, $m' < M$) :

$$crit0_M(m,m') = dist_{th}(dist_p(\rho'_{\min\max}(m), \rho_{\min\max}(m')), thresh0_M(m,m')),$$

$$crit1_M(m,m') = dist'_{th}(dist'_p(L'_1(m), L'_1(m')), thresh1_M(m,m'))$$

Avantageusement, une "distance" $dist_{th}$ est une simple différence entre un seuil et une distance $dist_p$ entre des paramètres d'au moins deux sous-bandes.

La distance $dist_p$ entre des paramètres d'au moins deux sous-bandes peut utiliser des rapports entre paramètres. Par exemple, dans le cas d'une « distance » entre paramètres de deux sous-bandes :

$$dist_p(L'_1(m), L'_1(m')) = \frac{L'_1(m)}{L'_1(m')} \quad \text{ou} \quad dist'_p(L'_1(m), L_{\infty}(m')) = \frac{L'_1(m)}{L_{\infty}(m')}$$

On note aussi qu'un même ensemble de paramètres peut être utilisé pour calculer plusieurs critères tant dans le cas d'un critère mono-bande que d'un critère multi-bande.

A partir d'au moins un critère local tel que défini, l'étape E904 est mise en oeuvre. A cette étape, une décision locale (« instantanée », notée $dec_{inst}^{cur}$) est prise en détectant si le contenu audio codé comporte des fréquences dans au moins une sous-bande.

Dans un mode particulier de réalisation, dans le cas de détection d'une bande de fréquence dite bande haute fréquence (i.e. fréquences supérieures à une fréquence seuil $F_{th}$), on décide si le contenu audio comporte des fréquences dans les sous-bandes $m$ telles que, $m_{th} \leq m$, où $m_{th}$ est l'indice de la sous-bande incluant la fréquence $F_{th}$. Au moins une de ces sous-bandes m est prise en considération à l'étape de décision.

Dans l'exemple particulier du codeur voix HD fixe G.722 à deux sous-bandes, quand on cherche à détecter si le contenu codé est réellement bande élargie (WB), on détecte s'il y a du contenu pertinent dans la deuxième sous-bande (sous-bande haute) pour prendre une décision "Bande étroite" NB ou "Bande élargie" WB.

Dans le cas où la bande de fréquence prédéterminée n'est pas la bande haute fréquence, la décision est bien sûr adaptée et les sous bandes considérées peuvent être celles qui sont inférieures à une fréquence seuil pour détecter une bande basse fréquence ou encore celles qui sont définies par des fréquences encadrant cette bande de fréquence prédéterminée.

Pour prendre cette décision, au moins un critère local est utile. En variante, plusieurs critères peuvent être utilisés seuls ou conjointement.

La décision peut être souple ou dure. Une décision dure consiste à comparer au moins un critère à un seuil et à prendre une décision binaire ou à états prédéfinis sur la présence de la bande de fréquence dans la sous-bande.

Une décision souple consiste à utiliser la valeur du critère pour définir selon un intervalle de valeurs prédéfinies, une probabilité plus ou moins importante de présence de la bande de fréquence dans la sous-bande considérée.

Dans un mode de réalisation particulier, une étape de détection du type de contenu, par exemple un contenu vocal, est d'abord réalisée afin de n'effectuer la détection locale que sur les trames pertinentes, c'est-à-dire comportant ce type de contenu.

Pour détecter ce type de contenu, de façon avantageuse, les paramètres déterminés en E902 sur les signaux représentatifs des signaux en sous-bandes sont utilisés.

Dans une variante de réalisation, pour augmenter la fiabilité de la détection, la décision finale pour un bloc courant d'échantillons, notée $dec^{cur}$, dépend non seulement de la détection locale « instantanée » mais aussi des détections passées. A partir de décisions locales souples ou dures par bloc, une décision globale est prise sur un nombre de K blocs précédents le bloc courant. Ce nombre de K blocs est ajustable en fonction d'un compromis fiabilité de la décision/rapidité de la décision.

Par exemple, les détections locales peuvent être lissées sur plusieurs blocs par une fenêtre éventuellement glissante. La dépendance de la décision courante aux détections passées peut aussi être fonction de la fiabilité de la décision locale. Par exemple, si la décision locale est estimée sûre, la dépendance de la décision courante vis-à-vis des décisions passées peut être minimisée voire même annulée.

Plusieurs modes de réalisation sont possibles pour le procédé de détection tel que décrit, tant dans le choix des paramètres, des critères, de la manière de combiner éventuellement plusieurs critères que dans l'utilisation de décision souples ou dures, localement ou globalement. Il est possible ainsi d'optimiser le compromis complexité/fiabilité de la détection ainsi que la réactivité de la détection.

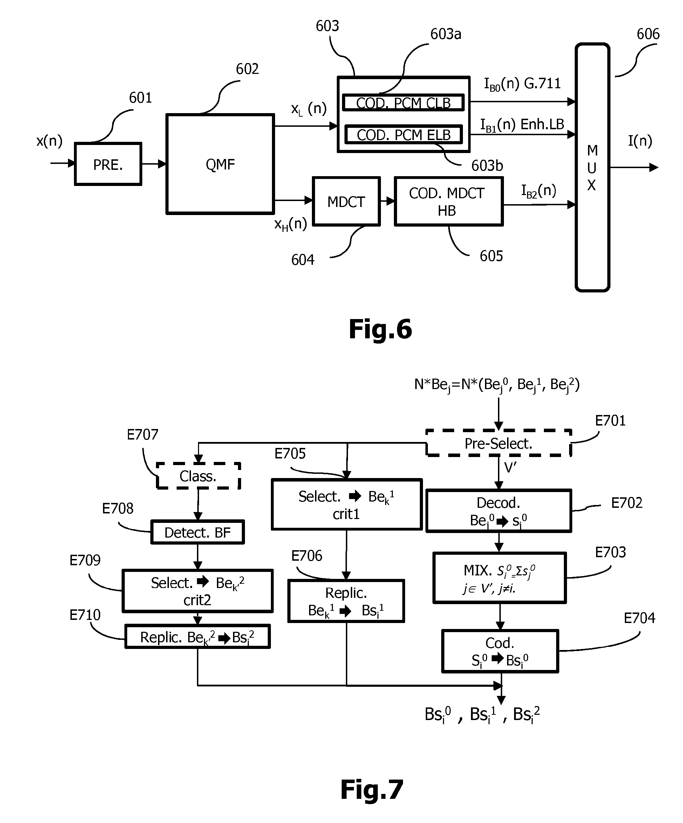

Un autre exemple de réalisation du procédé de combinaison selon l'invention est maintenant décrit. Ce mode de réalisation décrit la mise en oeuvre de l'invention dans un dispositif de mixage partiel comportant un pont combinant des flux codés par le codeur UIT-T G.711.1 à 96 kbit/s. Ce type de codeur, illustré à la **figure 6**, est un codeur en sous-bandes, la sous-bande basse est codée hiérarchiquement à 80 kbit/s (10 bits par échantillon) avec un codage coeur à 64 kbit/s (8 bits par échantillon) et une couche d'amélioration à 16 kbit/s (soit 2 bits par échantillon en moyenne) et la sous-bande haute à 16 kbit/s (2 bits par échantillon en moyenne). Il est aussi décrit dans le document susmentionné: "Rec. IUT-T G.711.1, Wideband embedded extension for G.711 pulse code modulation, 2008".

Le codeur G.711.1 opère sur des signaux audio échantillonnés à 16 kHz sur des blocs ou trames de 5 ms (soit 80 échantillons à 16 kHz). Le signal d'entrée x(n), après éventuellement un prétraitement par le module 601, est divisé en 2 sous-bandes [0, 4 kHz] et [4, 8 kHz] par des filtres QMF représentés en 602. A partir de deux échantillons d'entrée le filtre QMF donne en sortie un échantillon $x_L(n)$ de sous-bande basse (0-4000 Hz) et un échantillon $x_H(n)$ de sous-bande haute (4000-8000 Hz). Le débit de 64 kbit/s ("Layer 0" compatible avec le G.711) correspond à la quantification de la sous-bande [0, 4 kHz] par la technique MIC (Modulations par Impulsions et codage) équivalente au G.711, avec une mise en forme du bruit de quantification. Les deux couches suivantes ("Layers" 1 et 2) codent respectivement la sous-bande basse [0, 4 kHz] par une technique d'amélioration de codage MIC, et la sous-bande haute [4, 8 kHz] par un codage par transformée MDCT (pour "Modified Discrete Cosine Transform" en anglais), chacune avec un débit de 16 kbit/s (80 bits par trame). Quand le décodeur reçoit ces couches d'amélioration, il peut améliorer la qualité du signal décodé.

Le codage coeur du signal sous-bande basse est effectué par le module 603a, compris dans le module de codage 603 de la sous-bande basse, selon la technique MIC équivalente au G.711, avec une mise en forme du bruit de quantification. Nous rappelons brièvement ci-après le codage MIC utilisé dans le G.711.

Le codeur G.711 est basé sur une compression logarithmique sur 8 bits à la fréquence d'échantillonnage de 8 kHz, pour donner un débit de 64 kbit/s. Le codage MIC G.711 opère une compression des signaux filtrés dans la bande [300 - 3400 Hz] par une courbe logarithmique qui permet d'obtenir un rapport signal à bruit à peu près constant pour une large dynamique de signaux. Le pas de quantification varie avec l'amplitude de l'échantillon à coder: quand le niveau du signal d'entrée est faible, le pas de quantification est petit, quand le niveau du signal d'entrée est élevé, le pas de quantification est grand. Deux lois de compression MIC logarithmique sont utilisées: la loi μ (utilisée en Amérique

du Nord et au Japon) et la loi A (utilisée en Europe et dans le reste du monde). Le G.711 loi A et le G.711 loi μ encodent sur 8 bits les échantillons d'entrée. En pratique, pour faciliter l'implantation du codeur G.711, la compression MIC logarithmique a été approximée par une courbe en segments. Lors de cette compression, les bits de poids faible de la mantisse sont perdus.

Dans la loi A, les 8 bits sont répartis de la façon suivante :

- 1 bit de signe

- 3 bits pour indiquer le segment,

- 4 bits pour indiquer l'emplacement sur le segment.

Le codage de la couche d'amélioration ("Layer" 1) de la sous-bande basse (effectué par le module 603b de la figure 6) permet de réduire l'erreur de quantification de la couche coeur ("Layer" 0) à base de G.711 en ajoutant des bits supplémentaires aux échantillons codés en G.711 (Enh.LB). Cette technique qui permet d'obtenir une augmentation du RSB (Rapport signal à bruit) de 6 dB pour chaque bit ajouté par échantillon consiste à sauvegarder et à transmettre dans un flux binaire d'amélioration les bits de poids fort parmi les bits perdus lors du codage MIC initial.

La récupération et la transmission de bits non transmis dans la mantisse du codage coeur MIC améliore la qualité du codage de la sous-bande basse. En effet, en cas de réception de cette couche d'amélioration, le décodeur peut décoder la mantisse avec une plus grande précision. Dans le G.711.1, le nombre de bits additionnels pour la mantisse dépend de l'amplitude des échantillons : en effet, plutôt que d'allouer le même nombre de bits pour améliorer la précision du codage de mantisse des échantillons, les 80 bits disponibles dans la couche 1 du G.711.1 pour améliorer la précision du codage de mantisse des 40 échantillons sont alloués dynamiquement : plus de bits étant attribués aux échantillons avec un fort exposant. Ainsi, tandis que le budget de bits de la couche d'amélioration est de 2 bits par échantillon en moyenne (16 kbit/s), avec cette allocation adaptative, le nombre de bits alloués à un échantillon varie selon sa valeur d'exposant de 0 à 3 bits.

Pour la sous-bande haute, une transformée en cosinus discrète modifiée (en anglais « Modified Discrète Cosine Transform » MDCT) est d'abord effectuée par le module 604, sur des blocs du signal de la bande haute de 10 ms avec un recouvrement de 5 ms. Puis les 40 coefficients MDCT, $S_{HB}(k)$, sont codés par le module 605 par une quantification vectorielle à structure conjuguée entrelacée et ces coefficients sont ensuite pondérés puis normalisés (par la racine carrée de leur énergie). Ces coefficients sont alors répartis en 6 sous-vecteurs de dimension 6, les 4 coefficients représentant les plus hautes fréquences ne sont pas codés. Ces six sous-vecteurs sont quantifiés indépendamment sur 12 bits par un ensemble de deux dictionnaires à structure conjuguée, $C_{H0w}$ et $C_{H1W}$. Enfin un gain global par trame est calculé à partir des sous-vecteurs décodés et du facteur de normalisation, ce gain étant quantifié sur 8 bits par un quantificateur scalaire de type MIC loi μ.

Au décodeur, l'ensemble des 36 coefficients MDCT est reconstruit à partir des six sous-vecteurs décodés avec entrelacement inverse, et les 4 coefficients représentant les plus hautes fréquences non codés sont simplement mis à zéro puis le signal de la bande haute décodé est généré par transformée MDCT inverse.

Les différentes couches de codage ($I_{B0}(n), I_{B1}(n), I_{B2}(n)$) sont multiplexées en 606 pour donner le signal codé I(n).

Dans le mode réalisation décrit en référence à la **figure 7** qui représente les étapes du procédé selon l'invention, mises en oeuvre dans un dispositif de mixage partiel en architecture centralisée recevant des flux codés par le codeur UIT-T G.711.1 à 96 kbit/s, les flux binaires des deux couches d'amélioration d'une voie d'entrée sont répliqués, le mixage se limite à la couche coeur.

Ainsi, le pont reçoit N voies d'entrée (N flux binaires hiérarchiques codés par le G.711.1 à 96 kbit/s). On note pour chaque voie d'entrée ($0 \leq j < N$):

- $Be_j^0$ le flux binaire de la couche coeur sous-bande basse entrant;

- $Be_j^1$ le flux binaire de la couche d'amélioration de la sous-bande basse entrant;

- $Be_j^2$ le flux binaire sous-bande haute entrant;

- $s_j^0$ le signal reconstruit de la couche coeur (de la sous-bande basse) obtenu en décodant le flux $Be_j^0$;

- $s_j^1$ signal reconstruit de la sous-bande basse obtenu en décodant les flux $Be_j^0$ et $Be_j^1$;

- $s_j^2$ le signal reconstruit de la sous-bande haute obtenu en décodant le flux $Be_j^2$;

On note aussi pour chaque voie de sortie ($0 \leq i < N$):

- $Bs_i^0$ le flux binaire de la couche coeur de la sous-bande basse sortant;

- $Bs_i^1$ le flux binaire de la couche d'amélioration de la sous-bande basse sortant;

- $Bs_i^2$ le flux binaire de la couche d'amélioration de la sous-bande haute sortant.

A partir de ces N flux codés par sous-bande, une étape optionnelle E701 de présélection est mise en oeuvre.

Comme pour les modes de réalisation décrits en référence aux figures 5a et 5b, cette étape de présélection permet de sélectionner parmi les différentes voies d'entrée, celles qui respectent un ou plusieurs des critères de sélection décrits précédemment pour les méthodes de l'état de l'art. Par exemple, la sélection des flux peut être effectuée à partir de la détection d'activité vocale par le critère FCFS (pour "First Come First Serve" en anglais) ou à partir de la mesure de la puissance du signal ou de son énergie par le critère LT (pour "Loudest Talker" en anglais).

Ainsi, une partie (N' avec N'<N) des flux codés reçus par le dispositif de combinaison ou pont de mixage est pris en compte pour mettre en oeuvre le procédé de combinaison. Ceci réduit donc la complexité de mise en oeuvre des étapes du procédé puisque le nombre de voies à mixer est restreint.

Comme précédemment, nous utilisons la notation N' (avec N'≤N) que l'étape optionnelle E701 soit mise en oeuvre ou non, nous notons V' l'ensemble des indices de ces voies d'entrée. De même, la présélection peut être effectuée en variante ou en complément après l'étape de décodage.

L'étape E702 de décodage des N' flux de la couche coeur de la sous-bande basse, est ensuite mise en oeuvre. Ainsi, les couches coeur des sous-bandes basses $Be_j^0$ sont décodées pour obtenir les signaux reconstruits $s_j^0$.

A l'étape E703, une procédure de mixage des flux binaires ainsi décodés est effectué par addition de signaux ainsi reconstruits de la sous-bande basse (couche coeur): $S_i^0 = \Sigma s_j^0$ avec $j \in V'$, $j \neq i$. A noter que si $i \in V'$, $S_i^0$ est la somme de N'-1 signaux, sinon $S_i^0$ est la somme de N' signaux.

Le flux binaire de sortie de la couche coeur de la sous-bande basse ($Bs_i^0$) destiné à être transmis à un terminal Ti ($0 \leq i < N$) est alors obtenu par codage à l'étape E704, par l'encodeur coeur de la sous-bande basse du G.711.1 (MIC sur 8 bits avec mise en forme du bruit de codage) de ce signal somme $S_i^0$.

A partir de l'ensemble N' de voies d'entrée, une étape E705 de sélection d'au moins un flux binaire ($Be_k^1$) de la couche d'amélioration de la sous-bande basse (layer 1) d'une voie d'entrée k à répliquer est effectuée. Le critère (crit.1) utilisé pour cette sélection peut être un critère comme mentionné dans les méthodes de l'état de l'art, par exemple, le critère FCFS (pour "First Come First Serve" en anglais) ou encore le critère LT (pour "Loudest Talker" en anglais). Le choix du critère peut dépendre de celui employé à l'étape de présélection si elle a été mise en oeuvre. A partir de cette sélection, on obtient au moins un flux binaire de la couche d'amélioration de la sous-bande basse ($Bs_i^1$) à répliquer à l'étape E706 pour le transmettre vers le terminal $Ti$ : $Bs_i^1 = Be_k^1$ ($i \neq k$).

A partir à nouveau des N' flux codés une étape E708 de détection d'une bande de fréquence prédéterminée, dans la sous-bande haute, est effectuée. Dans ce mode de réalisation, la bande de fréquence prédéterminée est la bande haute fréquence. Cela permet de déterminer la présence d'un contenu HD dans le flux codé. Ainsi, une analyse du contenu audio des voies d'entrée est effectuée.

Différents modes de détection de la présence de la bande haute fréquence sont possibles. Par exemple, la méthode de détection d'un contenu HD dans un flux $j$ peut utiliser une comparaison de l'énergie du signal reconstruit de la sous-bande haute, $s_j^2$, avec celle du signal reconstruit de la sous-bande basse $s_j^1$. Ce mode de réalisation nécessite un décodage du flux audio à analyser dans la sous-bande haute, en plus du décodage de la sous-bande basse coeur 0 et de la sous-bande basse d'amélioration 1.

Au moins un flux binaire ($Be_{k'}^2$) de la sous-bande haute (layer 2) d'une voie d'entrée k' à répliquer pour la couche d'amélioration de la sous-bande haute à transmettre vers le terminal $Ti$ est sélectionné en E709 après analyse du contenu des voies d'entrée pour détecter s'il y a du contenu HD. Si la voie k' contient la bande de fréquence prédéterminée, on a alors $Bs_i^2 = Be_{k'}^2$ ($i \neq k'$).

Dans le cas où plusieurs flux codés comportent du contenu HD, une sélection supplémentaire, non représentée à la figure 7, peut être mise en oeuvre. Cette sélection supplémentaire peut par exemple se baser sur un critère de précédence de sélection du flux audio codé. Ainsi, le flux le plus récemment répliqué est choisi, ce qui apporte une continuité et une transition douce pour la commutation du flux répliqué. Alternativement, si la voie k sélectionnée à l'étape E705 pour répliquer la couche d'amélioration de la sous-bande basse contient effectivement la bande de fréquence prédéterminée (contenu HD), c'est le flux binaire $Be_k^2$ qui peut être sélectionné pour être répliqué $Bs_i^2 = Be_k^2$ ($i \neq k$).

La sélection de la sous-bande haute du flux codé k' comportant du contenu HD est ainsi effectué à l'étape E709 et constitue le flux audio de sortie $Bs_i^2 = Be_{k'}^2$. Ce flux binaire sous-bande haute $(Bs_i^2)$ est obtenu par réplication à l'étape E710 pour être transmis vers un terminal $Ti$ avec $i \neq k'$ en même temps que les deux flux de la sous-bande basse, le flux $Bs_i^1$ obtenu par réplication et le flux $Bs_i^0$ obtenu par codage du signal mixé.

Dans le cas où plusieurs flux de réplication ont été sélectionnés à l'étape E709 et/ou à l'étape E705, ces flux sont répliqués et combinés au flux mixé de la couche coeur de la sous-bande basse.

Dans une autre variante de réalisation, une étape de classification des voies d'entrée est effectuée en E707, avant l'étape de détection de la bande de fréquence. La classification peut par exemple se faire de la voie la plus récemment répliquée à celle la plus anciennement répliquée.

L'analyse faite à l'étape E708 s'effectue alors sur les flux des voies d'entrée classées dans l'ordre de celle dont le flux binaire sous-bande haute a été le plus récemment répliqué à celle dont le flux binaire sous-bande haute a été le plus anciennement répliqué. Dès qu'un flux HD a été détecté, l'analyse s'arrête.

Cette étape E707 peut bien évidemment utiliser un autre critère de classement des voies d'entrée comme dans le cas du mode de réalisation avec le codeur G.722 décrit en référence aux figures 5a et 5b.

L'étape E707 est optionnelle et peut être mise en oeuvre en complément ou non de l'étape de présélection E701.

Dans le cas où l'étape E701 de présélection est effectuée et dans le cas où aucun des flux présélectionnés ne contient de contenu HD détecté à l'étape E708, alors, la détection se fait sur les flux d'entrée non encore analysés pour trouver l'existence d'au moins un flux qui comporte la bande de fréquence prédéterminée. S'il en existe un, c'est alors celui-ci qui est sélectionné à l'étape E709.

Avantageusement, une mutualisation des étapes peut être mise en oeuvre pour la détection de contenu HD dans les voies d'entrée. De même, selon la méthode de détection utilisée, des paramètres qui ont été déterminés peuvent être réutilisés pour décoder la sous bande de fréquence du flux audio codé sélectionné. Ces paramètres ne sont alors plus à décoder, ce qui permet de réduire la complexité de décodage de ce flux.

Dans une variante de réalisation, la sélection d'au moins un flux binaire k à répliquer pour la couche 1 n'est pas faite selon les critères tels que décrit précédemment. Le flux binaire de la sous bande basse 1 à répliquer peut être dans ce cas de figure, celui correspondant au flux k' sélectionné à l'étape E709 pour la sous-bande haute.

Dans ce cas, les flux binaires $Be_{k'}^1$ et $Be_{k'}^2$ sont répliqués.

Dans un mode particulier de réalisation, le terminal dont le flux est répliqué (k' par exemple ici), ne reçoit pas de flux sous-bande haute ni de flux de couches d'amélioration puisque ces flux sélectionnés sont en provenance de ce terminal. Pour ce terminal, dans une variante de réalisation, une étape de sélection d'un deuxième flux HD à répliquer k1 peut être effectuée pour les couches d'amélioration de cette sortie : $Be_{k'}^1 = Be_{k1}^1$ et $Be_{k'}^2 = Be_{k1}^2$, $k1 \neq k'$.

Bien que l'invention soit décrite dans le cas du mixage partiel de flux codés par des codeurs en bande élargie avec un mixage conventionnel d'au moins la couche coeur de la bande étroite, on comprendra que l'invention s'applique aussi au mixage partiel de flux codés par des codeurs fonctionnant sur d'autres largeurs de bande (bande médium, bande super-élargie, bande HiFi, ...) avec un mixage conventionnel d'au moins une sous-bande basse et la réplication des flux codant les sous-bandes au-dessus des sous-bandes mixées. Par exemple dans le cas d'un codeur de type super-HD (à quatre sous-bandes codées par la technologie MICDA), l'application de l'invention peut par exemple consister à effectuer une recombinaison directe des signaux des deux sous-bandes basses (correspondant à la bande élargie [0-8 kHz]) et commuter les flux sélectionnés de deux sous-bandes hautes (correspondant à la bande audio [8-16 kHz]), la sélection de ces flux étant faite selon le procédé de l'invention. Un autre exemple d'application de l'invention à ce codeur super-HD consiste à mixer les signaux de la sous-bande la plus basse (correspondant à la bande étroite [0-4 kHz]) et commuter les flux de trois sous-bandes hautes (correspondant à la bande audio [4-16 kHz] sélectionnés selon l'invention.

De même la décomposition en sous-bandes de fréquences peut ne pas être effectuée par un banc de filtre. Ainsi dans le cas du codeur IETF décrit dans RFC6716, le signal à coder par le codeur à prédiction linéaire est obtenu par un ré-échantillonnage du signal à coder (par exemple pour obtenir un signal échantillonné à 16 kHz à partir d'un signal échantillonné à 48 kHz).

Dans ce cas l'invention décode la partie des flux binaires codant la bande élargie, mixe les signaux décodés bande élargie et sélectionne une voie d'entrée dont la partie du flux codée super-HD (fréquence au-dessus de la bande élargie) est répliquée.

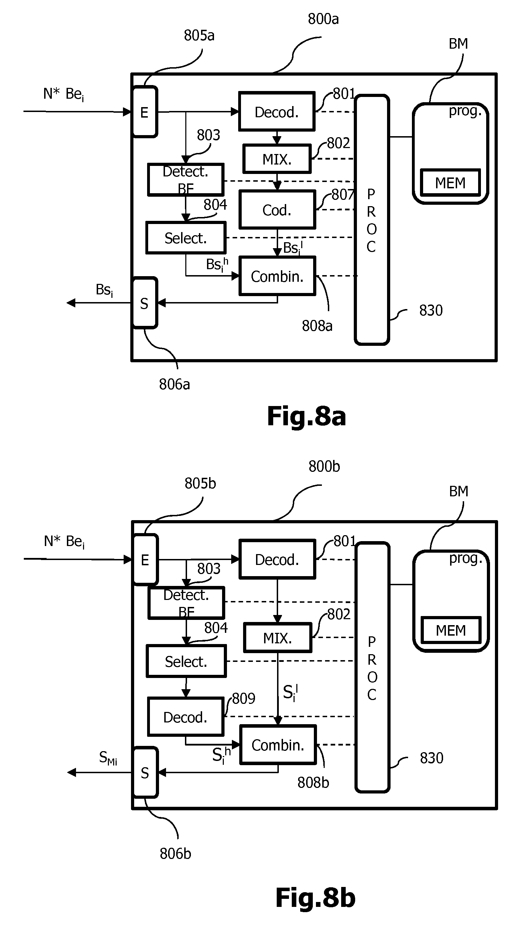

Les **figures 8a et 8b** représentent des dispositifs de combinaison 800a et 800b dans des exemples de réalisation de l'invention. Ces dispositifs mettent en oeuvre le procédé de combinaison tel que décrit en référence à la figure 3 par les étapes principales E301 à E304.

Le dispositif 800a de la figure 8a peut être plus particulièrement associé à un pont centralisé tel qu'un pont de conférence dans un système de communication comportant une pluralité de terminaux.

Le dispositif 800b de la figure 8b peut lui être plus particulièrement associé à un terminal ou passerelle de communication.

Matériellement, ces dispositifs 800a et 800b comportent un processeur 830 coopérant avec un bloc mémoire BM comportant une mémoire de stockage et/ou de travail MEM.

Le processeur pilote des modules de traitement aptes à mettre en oeuvre le procédé selon l'invention. Ainsi, ces dispositifs comportent un module 801 de décodage d'une partie des flux codés sur au moins une sous-bande de fréquence, un module 802 d'addition des flux ainsi décodés pour former un flux mixé, un module de détection 803 de présence d'une bande de fréquence prédéterminée dans un flux, un module 804 de sélection à partir du module de détection, parmi la pluralité de flux audio codés, d'au moins un flux codé de réplication, sur au moins une sous-bande de fréquence différente de celle de l'étape de décodage ci-dessus.

Le bloc mémoire peut avantageusement comporter un programme informatique (prog.) comportant des instructions de code pour la mise en oeuvre des étapes du procédé de combinaison au sens de l'invention, lorsque ces instructions sont exécutées par le processeur PROC et notamment les étapes de décodage d'une partie des flux codés sur au moins une sous-bande de fréquence, d'addition des flux ainsi décodés pour former un flux mixé, de sélection, parmi la pluralité de flux audio codés, d'au moins un flux codé de réplication, sur au moins une sous-bande de fréquence différente de celle de l'étape de décodage, la sélection du au moins un flux codé de réplication s'effectuant selon un critère prenant en compte la présence d'une bande de fréquence prédéterminée dans le flux codé.

Typiquement, la description de la figure 3 reprend les étapes d'un algorithme d'un tel programme informatique. Le programme informatique peut également être stocké sur un support mémoire lisible par un lecteur du dispositif ou téléchargeable dans l'espace mémoire de celui-ci.

La mémoire MEM enregistre de manière générale, toutes les données nécessaires à la mise en oeuvre du procédé de combinaison.

Le dispositif 800a de la figure 8a comporte en outre un module de codage 807 apte à mettre en oeuvre l'étape de codage E305a de la figure 3. Ce module de codage code le flux mixé obtenu par le module de mixage 802 avant qu'il soit combiné par le module de combinaison 808a au flux de réplication sélectionné par le module 804. Le module 808a est apte à mettre en oeuvre l'étape de combinaison E306a de la figure 3.

Les flux $Bs_i$ résultant de la combinaison sont transmis aux différents terminaux du système de communication via un module de sortie 806a. Ce dispositif 800a comporte également un module d'entrée 805a apte à recevoir une pluralité de flux audio codés $N*Be_i$ en provenance par exemple des différents terminaux du système de communication, ces flux audio codés ayant été codés par un codeur en sous-bandes de fréquence.

Le dispositif 800b de la figure 8b comporte un module de décodage 809 apte à mettre en oeuvre l'étape de décodage E305b de la figure 3. Ce module de décodage décode le flux de réplication sélectionné par le module 804 avant qu'il soit combiné par le module de combinaison 808b au flux mixé obtenu par le module de mixage 802. Le module 808b est apte à mettre en oeuvre l'étape de combinaison E306b de la figure 3.

Le flux $S_{Mi}$ résultant de la combinaison est transmis au système de restitution du dispositif ou terminal via un module de sortie 806b. Ce dispositif 800b comporte également un module d'entrée 805b apte à recevoir une pluralité de flux audio codés $N*Be_i$ en provenance par exemple de différents canaux de communication, ces flux audio codés ayant été codés par un codeur en sous-bandes de fréquence.

## Revendications

1. Procédé de combinaison d'une pluralité de flux audio codés selon un codage en sous-bandes de fréquence, comportant les étapes suivantes:

   - décodage (E301) d'une partie des flux codés sur au moins une sous-bande de fréquence;
   - addition (E302) des flux ainsi décodés pour former un flux mixé;
   - sélection (E303), parmi la pluralité de flux audio codés, d'au moins un flux codé de réplication, sur au moins une sous-bande de fréquence différente de celle de l'étape de décodage;

   le procédé étant **caractérisé en ce que** la sélection du au moins un flux codé de réplication s'effectue selon un critère prenant en compte la présence d'une bande de fréquence prédéterminée dans le flux codé (E304).

2. Procédé selon la revendication 1, **caractérisé en ce qu'**il comprend en outre une étape de présélection des flux audio codés selon un critère prédéterminé.

3. Procédé selon la revendication 1, **caractérisé en ce que**, dans le cas où plusieurs flux codés sont sélectionnés à l'étape de sélection, une sélection supplémentaire de flux codé de réplication est effectuée sur un critère de précédence de sélection des flux.

4. Procédé selon la revendication 1, **caractérisé en ce qu'**il comporte en outre une étape de ré-encodage du flux mixé et une étape de combinaison au flux de réplication obtenu.

5. Procédé selon la revendication 1, **caractérisé en ce que** l'étape de décodage s'effectue sur des sous-bandes de fréquence basses et la bande de fréquence prédéterminée du critère de sélection est une bande de fréquence supérieure auxdites sous-bandes de fréquence basses.

6. Procédé selon la revendication 1, **caractérisé en ce qu'**il comporte une étape préalable de classification des flux audio codés et **en ce que** le flux codé de réplication sélectionné est le premier flux dans cet ordre de classification dans lequel la bande de fréquence prédéterminée a été détectée.

7. Procédé selon la revendication 1, **caractérisé en ce que** la présence d'une bande de fréquence prédéterminée dans un flux codé s'effectue par une comparaison d'énergie, dans les différentes sous-bandes de fréquence, des flux audio décodés.

8. Procédé selon la revendication 1, **caractérisé en ce que** la présence d'une bande de fréquence prédéterminée dans un flux codé s'effectue selon les étapes suivantes:

   - détermination par sous-bande de fréquence d'un ensemble prédéterminé de sous-bandes, d'un signal estimé à partir du flux codé;
   - détermination par sous-bande de fréquence de l'ensemble prédéterminé de sous-bandes, de paramètres non codés représentatifs du contenu audio, à partir du signal estimé correspondant;
   - calcul d'au moins un critère local à partir des paramètres déterminés;
   - décision quant à la présence d'une bande de fréquence prédéterminée dans au moins une sous-bande du contenu audio en fonction du au moins un critère local calculé.

9. Dispositif de combinaison d'une pluralité de flux audio codés selon un codage en sous-bandes de fréquence, comportant:

   - un module (801) de décodage d'une partie des flux codés sur au moins une sous-bande de fréquence;
   - un module (802) d'addition des flux ainsi décodés pour former un flux mixé;
   - un module (804) de sélection, parmi la pluralité de flux audio codés, d'au moins un flux codé de réplication, sur au moins une sous-bande de fréquence différente de celle de l'étape de décodage;

   le dispositif étant **caractérisé en ce que** la sélection du au moins un flux codé de réplication s'effectue selon un critère prenant en compte la présence d'une bande de fréquence prédéterminée dans le flux codé (803).

10. Pont de conférence comportant un dispositif de combinaison selon la revendication 9.

11. Terminal de communication comportant un dispositif de combinaison selon la revendication 9.

12. Passerelle de communication comportant un dispositif de combinaison selon la revendication 9.

13. Programme informatique comportant des instructions de code pour la mise en oeuvre des étapes du procédé de combinaison selon l'une des revendications 1 à 8, lorsque ces instructions sont exécutées par un processeur.

14. Support de stockage lisible par un processeur, sur lequel est stocké un programme informatique comprenant des instructions de code pour l'exécution des étapes du procédé de combinaison selon l'une des revendications 1 à 8.


**Patentansprüche**

1. Verfahren zur Kombination einer Vielzahl von Audioflüssen, die gemäß einer Codierung in Frequenzteilbändern codiert sind, das die folgenden Schritte aufweist:

   - Decodierung (E301) eines Teils der in mindestens einem Frequenzteilband codierten Flüsse;
   - Addition (E302) der so decodierten Flüsse, um einen gemischten Fluss zu formen;
   - Auswahl (E303), aus der Vielzahl von codierten Audioflüssen, mindestens eines codierten Replikationsflusses in mindestens einem anderen Frequenzteilband als demjenigen des Decodierschritts;

wobei das Verfahren **dadurch gekennzeichnet ist, dass** die Auswahl des mindestens einen codierten Replikationsflusses gemäß einem Kriterium erfolgt, das das Vorhandensein eines vorbestimmten Frequenzbands im codierten Fluss berücksichtigt (E304).

2. Verfahren nach Anspruch 1, **dadurch gekennzeichnet, dass** es außerdem einen Vorauswahlschritt der gemäß einem vorbestimmten Kriterium codieren Audioflüsse enthält.

3. Verfahren nach Anspruch 1, **dadurch gekennzeichnet, dass** in dem Fall, in dem mehrere codierte Flüsse im Auswahlschritt ausgewählt werden, eine zusätzliche Auswahl eines codierten Replikationsflusses nach einem Kriterium der Auswahlrangfolge der Flüsse durchgeführt wird.

4. Verfahren nach Anspruch 1, **dadurch gekennzeichnet, dass** es außerdem einen Schritt der erneuten Codierung des gemischten Flusses und einen Schritt der Kombination mit dem erhaltenen Replikationsfluss enthält.

5. Verfahren nach Anspruch 1, **dadurch gekennzeichnet, dass** der Schritt der Decodierung an Niederfrequenzteilbändern durchgeführt wird, und das vorbestimmte Frequenzband des Auswahlkriteriums ein höheres Frequenzband als die Niederfrequenzteilbänder ist.

6. Verfahren nach Anspruch 1, **dadurch gekennzeichnet, dass** es einen vorhergehenden Schritt der Klassifizierung der codierten Audioflüsse aufweist, und dass der ausgewählte codierte Replikationsfluss der erste Fluss in dieser Klassifizierungsreihenfolge ist, in dem das vorbestimmte Frequenzband erfasst wurde.

7. Verfahren nach Anspruch 1, **dadurch gekennzeichnet, dass** das Vorhandensein eines vorbestimmten Frequenzbands in einem codierten Fluss durch einen Energievergleich, in den verschiedenen Frequenzteilbändern, der decodierten Audioflüsse ausgeführt wird.

8. Verfahren nach Anspruch 1, **dadurch gekennzeichnet, dass** das Vorhandensein eines vorbestimmten Frequenzbands in einem codierten Fluss gemäß den folgenden Schritten ausgeführt wird:

   - Bestimmung pro Frequenzteilband einer vorbestimmten Einheit von Teilbändern eines geschätzten Signals ausgehend vom codierten Fluss;
   - Bestimmung pro Frequenzteilband der vorbestimmten Einheit von Teilbändern von nicht codierten Parametern, die für den Audioinhalt repräsentativ sind, ausgehend vom entsprechenden geschätzten Signal;
   - Berechnung mindestens eines lokalen Kriteriums ausgehend von den bestimmten Parametern;
   - Entscheidung bezüglich des Vorhandenseins eines vorbestimmten Frequenzbands in mindestens einem Teilband des Audioinhalts abhängig von dem mindestens einen berechneten lokalen Kriterium.

9. Vorrichtung zur Kombination einer Vielzahl von gemäß einer Codierung in Frequenzteilbändern codierten Audioflüssen, die aufweist:

   - ein Modul (801) zur Decodierung eines Teils der codierten Flüsse in mindestens einem Frequenzteilband;
   - ein Modul (802) zur Addition der so decodierten Flüsse, um einen gemischten Fluss zu formen;
   - ein Modul (804) zur Auswahl, unter der Vielzahl von codierten Audioflüssen, mindestens eines codierten Replikationsflusses in mindestens einem anderen Frequenzteilband als demjenigen des Decodierschritts;

   wobei die Vorrichtung **dadurch gekennzeichnet ist, dass** die Auswahl des mindestens einen codierten Replikationsflusses gemäß einem Kriterium erfolgt, das das Vorhandensein eines vorbestimmten Frequenzbands im codierten Fluss berücksichtigt (803).

10. Konferenzbrücke, die eine Kombinationsvorrichtung nach Anspruch 9 aufweist.

11. Kommunikations-Endgerät, das eine Kombinationsvorrichtung nach Anspruch 9 aufweist.

12. Kommunikations-Gateway, das eine Kombinationsvorrichtung nach Anspruch 9 aufweist.

13. EDV-Programm, das Codeanweisungen zur Durchführung der Schritt des Kombinationsverfahrens nach einem der Ansprüche 1 bis 8 aufweist, wenn diese Anweisungen von einem Prozessor ausgeführt werden.

**14.** Speicherträger, der von einem Prozessor lesbar ist, auf dem ein EDV-Programm gespeichert ist, das Codeanweisungen zur Ausführung der Schritte des Kombinationsverfahrens nach einem der Ansprüche 1 bis 8 enthält.

**Claims**

**1.** Method for combining a plurality of audio streams coded according to a frequency sub-band coding, comprising the following steps:

- decoding (E301) of a part of the streams coded on at least one frequency sub-band;
- addition (E302) of the streams thus decoded to form a mixed stream;
- selection (E303), from among the plurality of coded audio streams, of at least one replication coded stream, on at least one frequency sub-band different from that of the decoding step;

the method being **characterized in that** the selection of the at least one replication coded stream is effected according to a criterion taking into account the presence of a predetermined frequency band in the coded stream (E304).

**2.** Method according to Claim 1, **characterized in that** it furthermore comprises a step of preselecting the coded audio streams according to a predetermined criterion.

**3.** Method according to Claim 1, **characterized in that**, in the case where several coded streams are selected in the selection step, an additional selection of replication coded stream is performed on a criterion of precedence of selection of the streams.

**4.** Method according to Claim 1, **characterized in that** it furthermore comprises a step of re-encoding the mixed stream and a step of combining with the replication stream obtained.

**5.** Method according to Claim 1, **characterized in that** the decoding step is performed on low-frequency sub-bands and the predetermined frequency band of the selection criterion is a frequency band above said low-frequency sub-bands.

**6.** Method according to Claim 1, **characterized in that** it comprises a prior step of classifying the coded audio streams and **in that** the replication coded stream selected is the first stream in this order of classification in which the predetermined frequency band has been detected.

**7.** Method according to Claim 1, **characterized in that** the presence of a predetermined frequency band in a coded stream is effected by a comparison of energy, in the various frequency sub-bands, of the decoded audio streams.

**8.** Method according to Claim 1, **characterized in that** the presence of a predetermined frequency band in a coded stream is effected according to the following steps:

- determination by frequency sub-band of a predetermined set of sub-bands, of a signal estimated on the basis of the coded stream;
- determination by frequency sub-band of the predetermined set of sub-bands, of non-coded parameters representative of the audio content, on the basis of the corresponding estimated signal;
- calculation of at least one local criterion on the basis of the parameters determined;
- decision as regards the presence of a predetermined frequency band in at least one sub-band of the audio content as a function of the at least one local criterion calculated.

**9.** Device for combining a plurality of audio streams coded according to a frequency sub-band coding, comprising:

- a module (801) for decoding a part of the streams coded on at least one frequency sub-band;
- a module (802) for adding the streams thus decoded to form a mixed stream;
- a module (804) for selecting, from among the plurality of coded audio streams, at least one replication coded stream, on at least one frequency sub-band different from that of the decoding step;

the device being **characterized in that** the selection of the at least one replication coded stream is effected according to a criterion taking into account the presence of a predetermined frequency band in the coded stream (803).

10. Conference bridge comprising a combining device according to Claim 9.

11. Communication terminal comprising a combining device according to Claim 9.

12. Communication gateway comprising a combining device according to Claim 9.

13. Computer program comprising code instructions for the implementation of the steps of the combining method according to one of Claims 1 to 8, when these instructions are executed by a processor.

14. Storage medium readable by a processor, on which is stored a computer program comprising code instructions for the execution of the steps of the combining method according to one of Claims 1 to 8.

**Fig.1a (Etat de l'art)**

**Fig.1b (Etat de l'art)**

A    P    201

Enh[A]

Core[A]

Select.

C

Replic.

Core[B+C]

Enh[C]

Core[C]

B    202

Enh[A]

Core[A+B]

Enh[B]

Core[B]

MIX.

(Core[B]+Core[C])

Enh[A]

(Core[A]+Core[C])

Core[A+C]

(Core[A]+Core[B])

203

## Fig.2 (Etat de l'art)

$N*Be_j = N*(Be_j^l, Be_j^h)$

E303    E301

Detect. BF

E304

Decod.

$Be_i^l \rightarrow S_i^l$

Select. $Be_k^h \rightarrow Bs_i^h$    E305b

MIX. $S_i^l = \Sigma_j s_j^l$    E302

Decod.

$Bs_i^h \rightarrow S_i^h$

Cod.

$S_i^l \rightarrow Bs_i^l$    E305a

Combin.

$(Bs_i^l, Bs_i^h)$

Combin.

$(S_i^l, S_i^h)$    E306b

E306a

## Fig.3

**Fig.4**

**Fig.5a**

**Fig.5b**

**Fig.6**

**Fig.7**

**Fig.8a**

**Fig.8b**

I(n)

E901

$$\tilde{s}_m(n), \tilde{s}_m(n)$$

E902

p(m), p'(m')

E903

Crit.

E904

dec.

BF

# Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1152596

**Littérature non-brevet citée dans la description**

- **SMITH, P.J. ; KABAL, P. ; BLOSTEIN M.L. ; RABIPOUR, R.** Tandem-free VoIP conferencing: a bridge to next-generation networks. IEEE Communications Magazine, Mai 2003, vol. 41
- **J. LENNOX ; E. IVOV ; E. MAROCCO.** A Real-time Transport Protocol (RTP) Header Extension for Client-to-Mixer Audio Level Indication. *RFC 6464,* Décembre 2011
- **HIWASAKI YUSUKE ; OHMURO HITOSHI.** ITU-T G.711.1: Extending G.711 to Higher-Quality Wideband Speech. IEEE Communications Magazine, Octobre 2009, vol. 47

- **VALIN, JM. ; VOS, K. ; T. TERRIBERRY.** Definition of the Opus Audio Codec. *RFC 6716,* Septembre 2012
- **LIAOYU CHANG ; XIAOQING YU ; HAIYING TAN ; WANGGEN WAN.** Research and Application of Audio Feature in Compressed Domain. *IET Conférence on Wireless, Mobile and Sensor Networks,* 2007, 390-393